# EUROPÄISCHE PATENTSCHRIFT

(11) **EP 3 044 131 B1**
(45) Veröffentlichungstag und Bekanntmachung des Hinweises auf die Patenterteilung: **21.02.2018**
(21) Anmeldenummer: 14752823.6
(22) Anmeldetag: 13.08.2014
(51) Int. Cl.: B65G 35/06, B65G 37/02, B65G 54/02

(54) **VORRICHTUNG UND VERFAHREN ZUR WARTUNG VON TRANSPORTELEMENTEN IN EINER BEHÄLTERBEHANDLUNGSANLAGE**
APPARATUS AND METHOD FOR SERVICING CONVEYOR ELEMENTS IN A CONTAINER HANDLING SYSTEM
DISPOSITIF ET PROCÉDÉ POUR ASSURER LA MAINTENANCE D'ÉLÉMENTS DE TRANSPORT DANS UN SYSTÈME DE TRAITEMENT DE CONTENANTS

(30) Priorität: 13.09.2013 DE 102013218394
(43) Veröffentlichungstag der Anmeldung: 20.07.2016
(73) Patentinhaber: Krones AG, 93073 Neutraubling (DE)
(72) Erfinder: SENN, Konrad, 93073 Neutraubling (DE); WALTER, Ralf, 93073 Neutraubling (DE)
(74) Vertreter: Grünecker Patent- und Rechtsanwälte PartG mbB
(86) Internationale Anmeldenummer: PCT/EP2014/067295
(87) Internationale Veröffentlichungsnummer: WO 2015/036194

(56) Entgegenhaltungen:
- WO-A1-2008/136659
- DE-A1-102012 201 059
- JP-A- 2011 037 623
- JP-A- 2012 101 870
- JP-A- 2012 239 334
- US-A- 3 537 402
- US-A1- 2003 149 509
- US-A1- 2006 230 975

## Beschreibung

### Gebiet der Erfindung

Die vorliegende Erfindung betrifft eine Vorrichtung und ein Verfahren zur Wartung von einzeln steuerbaren Transportelementen zum Transport von Behältern, insbesondere von Flaschen oder Dosen, in einer Anlage zur Behandlung der Behälter.

### Stand der Technik

Bei Behälterbehandlungsanlagen werden Behälter, wie z. B. Flaschen, Dosen, usw., in einem oder mehreren aufeinanderfolgenden Prozessschritten behandelt. Dabei werden im Allgemeinen die Prozessschritte bzw. Arbeitsschritte in separaten Behandlungseinheiten durchgeführt, die beispielsweise als Module eines gemeinsamen Anlagenkonzepts zusammengestellt werden können. Um Kosten für die Anschaffung und den Betrieb der Anlage zu reduzieren, werden üblicherweise Schnittstellen zur Steuerung der Anlage, zur Medienversorgung oder dergleichen vereinheitlicht, um die Kombination von Behandlungseinheiten unterschiedlicher Typen und/oder Produktionskapazitäten zu vereinfachen. Eine Behälterbehandlungsanlage für Kunststoffflaschen, z. B. aus Polyethylenterephthalat (PET), Polypropylen (PEP), usw., kann beispielsweise eine Heizvorrichtung zum Erwärmen der Vorformlinge, eine Streckblasvorrichtung zum Expandieren und Strecken der Vorformlinge zu Kunststoffflaschen, eine Reinigungsvorrichtung, eine Etikettiervorrichtung, eine Füllvorrichtung, eine Sortiervorrichtung, eine Verpackungsvorrichtung, eine Sterilisationsvorrichtung, eine Inspektionsvorrichtung, eine Temperiervorrichtung, eine Kühlvorrichtung, eine Beschichtungsvorrichtung, eine Puffervorrichtung, usw. als separate, modular ausgeführte Behandlungseinheiten umfassen. Die einzelnen Behandlungseinheiten, welche aufeinanderfolgende Prozessschritte durchführen, sind dabei im Stand der Technik im Allgemeinen in Reihe hintereinander geschaltet, wobei eine oder mehrere Transportvorrichtungen den Transport der Behälter von den Behandlungseinheiten zu den jeweiligen nachgeschalteten Behandlungseinheiten übernehmen.

Die Durchführung aufeinanderfolgender Prozessschritte durch die separaten Behandlungseinheiten der Anlage sowie der Transport zwischen den Behandlungseinheiten entspricht somit dem bekannten Prinzip der Fließbandverarbeitung, bei der ein kontinuierlicher Fluss von zu behandelnden Behältern durch die in Serie angeordneten Behandlungseinheiten mittels geeigneter Steuerungsprozesse bezüglich der Prozessdauer der einzelnen Prozessschritte und/oder der Menge der pro Zeiteinheit von einer Behandlungseinheit zur nächsten Behandlungseinheit transportierten Behälter erreicht wird. Bei den im Stand der Technik bekannten Anlagen wird der Transport der Behälter zwischen den Behandlungseinheiten vielfach mittels einer Vielzahl separater Transportelemente in Form von Trägern realisiert, welche die Behälter oder Vorformlinge mittels geeigneter Haltevorrichtungen, z. B. speziell geformter Greifelemente, bei einer Aufnahmestelle aufnehmen, durch die Reihe der aufeinanderfolgenden Behandlungseinheiten transportieren und schließlich an einer Abgabestelle abgeben. Die Behälter werden dabei im Allgemeinen durch geeignet ausgestaltete Zuförderer an den Aufnahmestellen an die Vielzahl der Transportelemente übergeben und entsprechend durch geeignet ausgestaltete Abförderer an den Abgabestellen von der Vielzahl der Transportelemente übernommen. Die aus Zuförderern, Behälterbehandlungseinheiten, Abförderern und den sie verbindenden Teilen der Transporteinrichtung gebildete Prozessstrecke ist im Allgemeinen ohne Ausweichmöglichkeiten für die Transportelemente ausgebildet, so dass ein einzelnes beschädigtes Transportelement die gesamte Prozessstrecke stoppen kann.

Um eine Transporteinrichtung einer solchen Behälterbehandlungsanlage mit einzeln steuerbaren Transportelementen zu betreiben, sind eine Vielzahl von Transportelementen nötig, um die Vielzahl der zu behandelnden Behälter, die sich im Eingriff der Behälterbehandlungsanlage befinden, zu bewegen. Um die Kosten der Transportelemente und somit der gesamten Behälterbehandlungsanlage möglichst niedrig zu halten, ist es wichtig, ein möglichst günstiges Führungs- und Lagersystem für die Transportelemente zu verwenden. Gleichzeitig muss jedoch gewährleistet werden, dass möglichst kein beschädigtes Transportelement den Fluss von Transportelementen entlang der Prozessstrecke behindert. Hierzu sind die verwendeten Transportelemente stets in technisch einwandfreiem Zustand zu halten. Dazu ist es erforderlich, möglichst frühzeitig Beschädigungen oder Verschleißerscheinungen der Transportelemente zu erkennen. Eine manuelle Prüfung und Wartung der Transportelemente durch das Bedienpersonal ist dabei sehr aufwendig und zeit- und kostenintensiv.

Es liegt somit der vorliegenden Erfindung die Aufgabe zugrunde, eine Vorrichtung und ein Verfahren zur automatischen Wartung der Transportelemente einer Transportvorrichtung in einer Behälterbehandlungsanlage zur Verfügung zu stellen, das die obengenannten Nachteile überwindet und insbesondere einen Stillstand der Prozessstrecke aufgrund eines fehlerhaften Transportelements vermeidet. Ganz allgemein liegt der vorliegenden Erfindung die Aufgabe zugrunde, die Kosten für die Installation und den Betrieb einer Transporteinrichtung zum Transport von Behältern in einer Behälterbehandlungsanlage mit einer Vielzahl von einzeln steuerbaren Transportelementen zu reduzieren.

Des Weiteren ist für einen reibungslosen Betrieb einer Behälterbehandlungsanlage die genaue Kenntnis der Position jedes einzelnen Transportelements entlang der Transportbahn von Bedeutung, sodass ein zur Transporteinrichtung gehörender Steuer- und/oder Regelkreis die einzelnen Transportelemente gemäß der Verarbeitungsrate der jeweiligen Behälterbehandlungseinheit bzw. mit der vorgegebenen Teilung entlang der Transportbahn führen kann. Darüber hinaus können für die reibungslose Steuerung auch der Beladungszustand der Transportelemente bzw. der Behandlungszustand der transportierten Behälter von Bedeutung sein. Zu diesem Zweck können die einzelnen Transportelemente jeweils eindeutige Identifikationseinheiten aufweisen, welche von einer oder mehreren geeigneten Identifikationserfassungsvorrichtungen entlang der Transportbahn beim Passieren der Transportelemente gelesen werden können. Alternativ dazu werden im Stand der Technik auch ununterscheidbare Transportelemente verwendet, welchen lediglich aufgrund Ihrer Reihenfolge entlang der Transportbahn beim Initialisieren der Transporteinrichtung, insbesondere beim Einschalten der Behälterbehandlungsanlage, Nummern von der Steuereinheit des Steuer- und/oder Regelkreises zugewiesen werden.

Beim Ausschalten der Steuerspannung des Steuer- und/oder Regelkreises, insbesondere im Falle eines Stromausfalls oder beim Abfahren der gesamten Behälterbehandlungsanlage, verlieren die Transportelemente jedoch ihre Absolutposition entlang der Transportbahn und können somit nicht weiterverfolgt werden. Insbesondere verliert die Steuereinheit des Steuer- und/oder Regelkreises bei Unterbrechung ihrer Stromversorgung im Allgemeinen jegliche Information über die Position und/oder Reihenfolge der Transportelemente entlang der Transportbahn. Eine Produktverfolgung wird damit unmöglich. Zudem wird eine Initialisierung der Transporteinrichtung bei späterem Wiederanfahren der Behälterbehandlungsanlage deutlich komplizierter und fehleranfälliger, da die Transportelemente teilweise nicht erkannt werden können. So kann selbst bei Vorhandensein eindeutiger Identifikationseinheiten an den Transportelementen eine Identifikation, insbesondere im Hinblick auf die Reihenfolge der Transportelemente, einen Beladungszustand und/oder einen Behandlungszustand des transportierten Behälters erst bei Passieren einer entsprechenden Identifikationserfassungseinheit erfolgen. Eine unkontrollierte Restbewegung der Transportelemente aufgrund deren Trägheit kann zudem beim Ausschalten der Behälterbehandlungsanlage bzw. beim Ausfall der Stromversorgung zu einer relativen Verschiebung der Transportelemente entlang der Transportbahn führen. Dadurch ist eine gewünschte Teilung beim Wiederanfahren der Anlage nicht mehr gegeben. US 2003/0149509 A1 offenbart eine gattungsgemäße Transporteinrichtung. Der vorliegenden Erfindung liegt somit weiterhin die Aufgabe zugrunde, ein Initialisierungsverfahren beim Wiederanfahren einer Behälterbehandlungsanlage und deren Transporteinrichtung nach Abstellen bzw. Ausfall der Stromversorgung der Transporteinrichtung zu vereinfachen und zu verkürzen.

### Beschreibung der Erfindung

Die obengenannte Aufgabe wird gelöst durch ein Verfahren nach Anspruch 17 und durch eine Transporteinrichtung zum Transport von Behältern in einer Behälterbehandlungsanlage nach den Ansprüchen 1, 2 oder 3, mit einer Transportbahn,
mindestens einem Transportelement zum Transportieren eines oder mehrerer Behälter, das an der Transportbahn bewegbar angeordnet ist,
einer Wartungsvorrichtung für das Transportelement, welche mit der Transportbahn verbunden ist, und
einer Steuer- und/oder Regeleinheit,
wobei die Transportbahn und das Transportelement derart ausgestaltet sind, dass das Transportelement mittels der Steuer- und/oder Regeleinheit einzeln steuerbar entlang der Transportbahn geführt werden kann, und
wobei die Steuer- und/oder Regeleinheit dazu ausgebildet ist, das Transportelement in Abhängigkeit von mindestens einem Zustandsparameter des Transportelements der Wartungsvorrichtung zuzuführen.

Unter Transporteinrichtungen werden hier und im Folgenden Fördereinrichtungen verstanden, die für die Behälter Transportelemente aufweisen, welche in einem geschlossenen Kreislauf gefördert werden. Dies schließt jedoch nicht aus, dass zumindest Teilstrecken der Transporteinrichtung keinen geschlossenen Kreislauf bilden.

Erfindungsgemäß weist die Transporteinrichtung mindestens ein Transportelement zum Transportieren eines oder mehrerer Behälter auf. Insbesondere kann die Transporteinrichtung eine Vielzahl von einzeln steuerbaren Transportelementen umfassen, die bewegbar an einer Transportbahn der Transporteinrichtung angeordnet sind. Dabei kann die Vielzahl von Transportelementen eine Vielzahl von gleichgestalteten Transportelementen umfassen, welche einzeln und unabhängig voneinander entlang der Transportbahn bewegt werden können. Dies schließt jedoch nicht aus, dass sich einzelne Transportelemente bezüglich eines oder mehrerer Merkmale voneinander unterscheiden. Insbesondere kann die Vielzahl von Transportelementen wenigstens zwei Gruppen von jeweils gleichgestalteten Transportelementen umfassen, welche sich untereinander aufgrund wenigstens eines Merkmals, z. B. eines funktionalen Elements wie eines Greifelements und/oder einer Ausführung des weiter unten beschriebenen Reaktionselements, unterscheiden. Die Anzahl der Transportelemente an der Transportbahn ist dabei prinzipiell beliebig und lediglich durch die Länge der Transportbahn begrenzt, solange nur mindestens ein Transportelement vorhanden ist. Zur Aufnahme des mindestens einen Behälters an einer Aufnahmestelle und zur Abgabe der Behälter an einer Abgabestelle können die Transportelemente mit einer geeigneten Haltevorrichtung, z. B. in Form eines Greifelements, ausgestaltet sein. Das Greifelement kann dabei passiv oder aktiv steuerbar ausgebildet sein. Insbesondere sind Greifelemente zum formschlüssigen oder kraftschlüssigen Greifen eines Halsbereichs der Behälter, z. B. beim sogenannten Neckhandling von Kunststoffflaschen, vorstellbar, wobei der gehaltene Behälter beim formschlüssigen Greifen um seine Längsachse in dem Greifelement drehbar gelagert ist. Zudem kann das Greifelement schwenkbar und/oder höhenverstellbar ausgebildet sein.

Behälter im Sinne der Erfindung sind insbesondere Getränkeflaschen, aber auch andere Behälter für Lebensmittel, Medikamente, Hygieneartikel, Reinigungsmittel oder dergleichen, wie z. B. Dosen, Glasflaschen oder andere Glasbehälter mit Deckel, Verpackungen auf der Basis von Karton oder Verbundstoffen, Tetrapack oder Ähnliches. Ebenso sind bei Behältern aus Kunststoff auch Zwischenprodukte, insbesondere Vorformlinge zum Streckblasen der Behälter vorstellbar. Des Weiteren sind unter Behältern im Sinne der Erfindung auch zusammengestellte Gebinde mit mehreren Behältern zu verstehen.

Die Transportelemente können als Läufer, Puck, Schlitten, Shuttle oder dergleichen ausgebildet sein, welche durch Wechselwirkung mit der Transportbahn bewegt werden. Jedes Transportelement kann dabei je nach Bedarf an der Transportbahn beschleunigt, abgebremst, mit konstanter Geschwindigkeit bewegt oder auch zeitweise ganz angehalten werden. Durch individuelles Steuern der Transportelemente lässt sich somit ein variables Weg-Zeit-Profil jedes einzelnen Transportelements realisieren. Des Weiteren kann das mindestens eine Transportelement eine eindeutige Identifikationseinheit, z. B. in Form eines Strichcodes, auslesbaren Speicherchips, eines aufgedruckten, aufgeklebten und/oder eingravierten alphanumerischen Codes, etc., umfassen, wobei durch eine oder mehrere geeignete Identifikationserfassungsvorrichtungen entlang der Transportbahn eine Identifikation des Transportelements, welches die entsprechende Identifikationserfassungsvorrichtung passiert, ermöglicht wird. Die Identifikationseinheit des Transportelements kann insbesondere zum gezielten Leiten des Transportelements, z. B. zu einer bestimmten Abgabestelle, eingesetzt werden.

Die Form der Transportbahn ist grundsätzlich beliebig. Insbesondere kann die Transportbahn im Wesentlichen geschlossen sein, wobei im Wesentlichen geschlossen bedeutet, dass die Transportbahn mindestens einen geschlossenen Weg für die Transportelemente ermöglicht. In einer Ausführungsform kann dies durch Bereitstellen einer Rückführstrecke als Teil der Transportbahn realisiert werden, wobei die Rückführstrecke ein Rückführen der Transportelemente von einer Abgabestelle zu einer Aufnahmestelle ermöglicht. Die Transportbahn kann jedoch auch zumindest teilweise offen ausgestaltet sein, in der Art, dass wenigstens eine Teilstrecke der Transportbahn als Sackgasse für die Transportelemente ausgeführt ist, wobei eine Rückführung der Transportelemente durch Umkehr der Bewegungsrichtung ermöglicht werden kann. Insbesondere kann eine derartige Sackgasse an einer der Abgabestellen enden.

Erfindungsgemäß sind die Transportbahn und das Transportelement derart ausgestaltet, dass das Transportelement mittels einer Steuer- und/oder Regeleinheit der Transporteinrichtung einzeln steuerbar entlang der Transportbahn geführt werden kann. Zum Führen des mindestens einen Transportelements beim Bewegen des Transportelements entlang der Transportbahn kann die Transportbahn eine Führungsschiene und/oder einen Führungskanal aufweisen. Dementsprechend kann das Transportelement einen komplementären Führungskanal, ein komplementäres Führungselement, z. B. einen Führungsstift, und/oder eine oder mehrere geeignet angeordnete Führungsrollen aufweisen, welche z. B. mittels eines Spurkranzes auf der Führungsschiene der Transportbahn laufen. Eine Vielzahl alternativer Ausführungsformen, z. B. mittels des weiter unten beschriebenen Gleitlagers, ist hier vorstellbar. Durch das Bereitstellen einer Führungsschiene auf der Transportbahn kann ein reibungsarmes Gleiten der Transportelemente entlang der Transportbahn ermöglicht werden. Darüber hinaus kann die Transportbahn über eine Lauffläche verfügen, auf welcher entsprechende Stützelemente, z. B. Stützrollen, abrollen bzw. gleiten können.

Erfindungsgemäß wird das mindestens eine Transportelement mittels einer Steuer- und/oder Regeleinheit, z. B. in Form eines Prozessrechners, entlang der Transportbahn geführt. Die Steuer- und/oder Regeleinheit kann dabei Teil einer Steuer- und/oder Regeleinheit der Behälterbehandlungsanlage sein oder als separate Steuer- und/oder Regeleinheit der Transporteinrichtung ausgebildet sein. Weiterhin kann die Steuer- und/oder Regeleinheit durch eine zentrale Steuer- und/oder Regeleinheit und/oder durch dezentral an den Transportelementen angeordnete Steuer- und/oder Regeleinheiten realisiert werden. Des Weiteren können die eine oder mehrere Steuer- und/oder Regeleinheiten als speicherprogrammierbare Steuereinheit(en) SPS ausgebildet sein.

Erfindungsgemäß weist die Transporteinrichtung eine Wartungsvorrichtung für das mindestens eine Transportelement auf, welche mit der Transportbahn verbunden ist. Hierbei kann die Wartungsvorrichtung über eine Nebenstrecke der Transportbahn (siehe unten), eine der im Stand der Technik bekannten herkömmlichen Fördereinrichtungen, wie z. B. ein Transportband oder eine Transportkette, oder eine Entnahmevorrichtung mit der Transportbahn verbunden sein, welche derart ausgebildet ist, dass sie einzelne Transportelemente aus einem Strom von Transportelementen entlang der Transportbahn entnehmen und der Wartungsvorrichtung zuführen kann. Eine solche Entnahmevorrichtung kann beispielsweise in Form eines Greifelements oder Greifarms realisiert werden. Eine entsprechende Rückgabevorrichtung kann derart ausgebildet sein, dass sie Transportelemente von der Wartungsvorrichtung zurück in den Strom der Transportelemente entlang der Transportbahn einführt. In der Wartungsvorrichtung kann eine Wartung der fehlerhaften Transportelemente manuell durch das Bedienungspersonal erfolgen. Im einfachsten Fall kann die Wartungsvorrichtung als Teil der Transportbahn ausgebildet sein, welcher sich technisch nicht wesentlich von der restlichen Transportbahn unterscheidet, sondern lediglich aufgrund einer leichten Zugänglichkeit und/oder einer farblichen Markierung und/oder einer Markierung mittels eines alphanumerischen Codes als Wartungsvorrichtung definiert wird. In diesem Fall kann eine Ausgabeeinheit der Behälterbehandlungsanlage, z. B. in Form eines Touchscreens oder Displays, anzeigen, ob und in welcher Wartungsvorrichtung sich ein zu wartendes Transportelement befindet, so dass das Bedienungspersonal ablesen kann, wo eine manuelle Wartung des Transportelements durchzuführen ist. Alternativ oder zusätzlich kann eine Wartung der Transportelemente in der Wartungsvorrichtung halbautomatisch oder vollautomatisch erfolgen (siehe weiter unten). Die Wartungsvorrichtung kann dabei derart ausgebildet sein, dass mehr als ein Transportelement gleichzeitig gewartet werden kann. Insbesondere kann die Wartungsvorrichtung derart ausgebildet sein, dass mehrere Transportelemente gleichzeitig demselben Wartungsprozess unterworfen werden können. Mögliche Wartungsprozesse umfassen dabei das Reinigen des Transportelements, das Sterilisieren des Transportelements, das Beaufschlagen von Laufflächen und/oder Lagerstellen des Transportelements mit einem Schmiermittel, die Reparatur oder den Austausch von Verschleißteilen und/oder Formatteilen des Transportelements sowie den Umbau von Funktionselementen des Transportelements (siehe weiter unten).

Erfindungsgemäß ist die Steuer- und/oder Regeleinheit dazu ausgebildet, das Transportelement in Abhängigkeit von mindestens einem Zustandsparameter des Transportelements der Wartungsvorrichtung zuzuführen. Darüber hinaus kann die Steuer- und/oder Regeleinheit dazu ausgebildet sein, das Durchführen eines oder mehrerer Wartungsprozesse an dem Transportelement in der Wartungsvorrichtung zu steuern.

Der mindestens eine Zustandsparameter des Transportelements kann einen individuellen Zustandsparameter des Transportelements, d. h. einen Zustandsparameter, welcher für jedes Transportelement separat überwacht wird, und/oder einen allgemeinen Zustandsparameter für eine Gruppe oder die Gesamtheit der Transportelemente der Transporteinrichtung umfassen. Als Zustandsparameter ist insbesondere die Standzeit des Transportelements bzw. der Vielzahl von Transportelementen seit der letzten Wartung bzw. seit Inbetriebnahme der Transporteinrichtung denkbar. Zu diesem Zweck kann die Steuer- und/oder Regeleinheit derart ausgebildet sein, dass sie die Standzeit der einzelnen Transportelemente bzw. der Vielzahl von Transportelementen z. B. mittels eines Zeitmessers überwacht, um bei Erreichen einer vorgegebenen maximalen Standzeit das oder die Transportelemente der Wartungsvorrichtung zuzuführen. Insbesondere kann die Steuer- und/oder Regeleinheit dabei einen Teil der Transportbahn, die Fördereinrichtung bzw. die Entnahmevorrichtung, mit welcher das Transportelement der Wartungsvorrichtung zugeführt wird, entsprechend steuern.

Zur Überwachung individueller Zustandsparameter der einzelnen Transportelemente durch die Steuer- und/oder Regeleinheit können die Transportelemente derart ausgebildet sein, dass sie durch die Steuer- und/oder Regeleinheit eindeutig identifiziert werden können. Zu diesem Zweck können die einzelnen Transportelemente jeweils eindeutige Identifikationseinheiten aufweisen, welche wie bereits oben erwähnt von einer oder mehreren geeigneten Identifikationserfassungsvorrichtungen entlang der Transportbahn beim Passieren der Transportelemente gelesen werden können. Alternativ dazu werden im Stand der Technik auch ununterscheidbare Transportelemente verwendet, welchen lediglich aufgrund ihrer Reihenfolge entlang der Transportbahn beim Initialisieren der Transporteinrichtung, insbesondere beim Einschalten der Behälterbehandlungsanlage, Nummern von der Steuer- und/oder Regeleinheit zugewiesen werden. Die Steuer- und/oder Regeleinheit überwacht dabei die Reihenfolge und/oder Positionen der Transportelemente entlang der Transportbahn mittels einer Speichereinheit. Die Steuer- und/oder Regeleinheit kann dabei so als Teil eines energiegepufferten Steuer- und/oder Regelkreises ausgebildet sein, dass sie die Positionen und die Zustandsparameter der einzelnen Transportelemente auch bei einem außerplanmäßigen Stopp der Behandlungsanlage wie z. B. einem Stromausfall oder in einer Notaussituation, speichert (siehe unten). Eine Energiepufferung des Steuer- und/oder Regelkreises kann beispielsweise über eine unterbrechungsfreie Stromversorgung (USV), eine Batterie oder ähnliches realisiert werden. Zudem können die entsprechenden Daten im Fall längerer Stromausfälle in einem nichtflüchtigen Speichermedium, wie z. B. einer Festplatte, einer Flash-Speicherkarte oder einem optischen Speichermedium, gespeichert und bei Wiederanfahren der Behälterbehandlungsanlage ausgelesen werden. Intern ordnet die Steuer- und/oder Regeleinheit jedem der Transportelemente mindestens einen individuellen Zustandsparameter, z. B. die Standzeit des jeweiligen Transportelements, zu, um bei Bedarf einzelne Transportelemente in Abhängigkeit von deren individuellen Zustandsparametern der Wartungsvorrichtung zuzuführen. Die Zuordnung und Überwachung individueller Zustandsparameter der einzelnen Transportelemente hat hierbei den Vorteil, dass nicht alle Transportelemente gleichzeitig der Wartungsvorrichtung zugeführt werden, welches zu einem vorübergehenden Stillstand der Behälterbehandlungsanlage und somit zu Verlust wertvoller Produktionszeit führen würde. Stattdessen können mittels der Steuer- und/oder Regeleinheit einzelne Transportelemente bei Bedarf aus dem Strom der Transportelemente ausgeschleust bzw. entnommen werden und bei weiterlaufender Produktion in der Wartungsvorrichtung unabhängig von den anderen Transportelementen gewartet werden.

Bei Vorhandensein eindeutiger Identifikationseinheiten, z. B. in Form eines Strichcodes, auslesbaren Speicherchips, eines aufgedruckten, aufgeklebten und/oder eingravierten alphanumerischen Codes, etc. kann eine Überwachung individueller Zustandsparameter der Transportelemente durch die Steuer- und/oder Regeleinheit kontinuierlich, also auch über ein Abfahren der Behälterbehandlungsanlage hinaus erfolgen. Zu diesem Zwecke kann die Steuer- und/oder Regeleinheit über eine Speichereinheit mit einem nichtflüchtigen Speichermedium verfügen, in welchem die Werte der individuellen Zustandsparameter und optional die Positionen der Transportelemente entlang der Transportbahn zusammen mit den die Transportelemente eindeutig identifizierenden Codes bei Abfahren der Behälterbehandlungsanlage gespeichert werden können. Als Teil einer Initialisierungsroutine beim Wiederanfahren der Behälterbehandlungsanlage kann dann die Steuer- und/oder Regeleinheit die gespeicherten Werte aus der Speichereinheit auslesen und während des Betriebs der Transporteinrichtung überwachen. Wie bereits oben angedeutet können die einzelnen Transportelemente, insbesondere als Teil einer Initialisierungsroutine, beim Passieren einer oder mehrerer geeigneter Identifikationserfassungsvorrichtungen durch Lesen der jeweiligen Identifikationseinheiten eindeutig den gespeicherten individuellen Zustandsparametern zugeordnet werden.

In einer alternativen Ausführungsform können die Identifikationseinheiten der Transportelemente individuelle Speichereinrichtungen aufweisen, in welchen die individuellen Werte des mindestens einen Zustandsparameters der Transportelemente mittels einer oder mehrerer entlang der Transportbahn angeordneter Schreibvorrichtungen von der Steuer- und/oder Regeleinheit gespeichert werden können. Ein solcher Schreibvorgang kann beispielsweise durch Passieren der jeweiligen Schreibvorrichtung ausgelöst werden oder als Teil eines Prüfvorgangs mittels einer Prüfvorrichtung (wie weiter unten beschrieben) erfolgen. Die gespeicherten Werte können anschließend mittels einer oder mehrerer dazu ausgebildeter Lesevorrichtung/en, insbesondere mittels der oben beschriebenen Identifikationserfassungsvorrichtungen von der Steuer- und/oder Regeleinheit, insbesondere während eines Initialisierung der Transporteinrichtung, gelesen und überwacht werden. Bei Speichern der individuellen Zustandsparameter in nichtflüchtigen Speichermedien der individuellen Speichereinrichtungen der einzelnen Transportelemente bleibt der Wert des mindestens einen Zustandsparameters auch über ein Abfahren der Behälterbehandlungsanlage hinaus erhalten. Dadurch können einzelne Transportelemente vorübergehend aus dem Strom der Transportelemente ausgeschleust oder sogar vollständig aus der Transporteinrichtung entnommen werden, um z. B. in einer äquivalent ausgebildeten Transporteinrichtung einer weiteren Behälterbehandlungsanlage verwendet zu werden. Durch Ausstatten der Transportelemente mit individuellen Speichereinrichtungen mit nichtflüchtigen Speichermedien kann somit eine individuelle Wartung der einzelnen Transportelemente trotz flexibler Anpassung der in der Transporteinrichtung eingesetzten Zahl von Transportelementen realisiert werden. Da nichtflüchtige Speichermedien im Stand der Technik wohlbekannt sind, werden hier lediglich eine Festplatte, ein optisches Speichermedium und ein Flashspeicher als Beispiele genannt.

Neben der Standzeit des Transportelements kann als Zustandsparameter des Transportelements auch ein Zähler für die Anzahl der Umläufe des Transportelements in einem geschlossenen Teil der Transportbahn, die Anzahl der von dem Transportelement transportierten Behälter, ein Verschleißgrad eines Lagerelements des Transportelements, z. B. die Dicke eines Gleitlagers, ein Abrieb des Gleitlagers, ein Abstand eines Gehäuses des Transportelements von einer Führungsschiene der Transportbahn oder ein Wert für das Spiel des Gleitlagers, sowie ein Flag, welches die Fehlerfreiheit eines Funktionselements des Transportelements kennzeichnet, verwendet werden. Für Transportelemente mit unterschiedlicher Lagerung bzw. unterschiedlichen Funktionselementen ist darüber hinaus das Überwachen und potentielle Speichern verschiedener individueller Zustandsparameter durch die Steuer- und/oder Regeleinheit denkbar.

In Abhängigkeit von dem mindestens einen Zustandsparameter des Transportelements führt die Steuer- und/oder Regeleinheit das Transportelement der Wartungsvorrichtung zur Durchführung eines oder mehrerer Wartungsprozesse zu. Hierzu kann der entsprechende Zustandsparameter von der Steuer- und/oder Regeleinheit stromaufwärts von der Wartungsvorrichtung mittels einer Prüfvorrichtung bestimmt bzw. mittels einer Lese- bzw. Identifikationserfassungsvorrichtung erfasst werden, so dass das Transportelement bei Bedarf von der Steuer- und/oder Regeleinheit der Wartungsvorrichtung zugeführt werden kann. Dadurch kann die erfindungsgemäße Transporteinrichtung beschädigte oder fehlerhafte Transportelemente der Wartungsvorrichtung zuführen, bevor ein solches Transportelement die Prozessstrecke blockieren könnte. Durch regelmäßige Wartung, z. B. basierend auf der überwachten Standzeit der Transportelemente, bzw. durch Bedarfswartung kann somit ein reibungsloses Funktionieren der Transporteinrichtung ohne Verlust wertvoller Produktionszeit garantiert werden.

Gemäß einer Weiterbildung können das Transportelement und zumindest ein Teil der Transportbahn derart ausgebildet sein, dass das Transportelement im Bereich des Teils der Transportbahn mittels einer magnetischen Kraft, vorzugsweise in Wechselwirkung mit der Transportbahn, bewegt werden kann. Erfindungsgemäß sind die Transportbahn und die Transportelemente derart ausgestaltet, dass jedes Transportelement einzeln steuerbar entlang der Transportbahn, z. B. von einer Aufnahmestelle zu einer Abgabestelle, geleitet werden kann. Dies bedeutet, dass das mindestens eine Transportelement mindestens ein Reaktionselement aufweist, welches mittels mechanischer und/oder elektromagnetischer Wechselwirkung mit entlang der Transportbahn angeordneten Wechselwirkungselementen eine Kraft erfährt, durch welche das Transportelement beschleunigt und somit bewegt werden kann. Durch gezieltes Ansteuern des Reaktionselements eines bestimmten Transportelements und/oder einer oder mehrerer Wechselwirkungselemente in einem begrenzten Bereich der Transportbahn kann diese Kraftausübung auf ein bestimmtes Transportelement beschränkt werden, wodurch das Transportelement einzeln und unabhängig von anderen Transportelementen entlang der Transportbahn geleitet werden kann. In der beschriebenen Weiterbildung kann das Transportelement mittels einer magnetischen Kraft, vorzugsweise in Wechselwirkung mit der Transportbahn, bewegt werden. Dabei erfolgt die individuelle Steuerung der Transportelemente bzw. das Ansteuern der Reaktionselemente und/oder der Wechselwirkungselemente mittels der Steuer- und/oder Regeleinheit der Transporteinrichtung.

Somit kann der entsprechende Teil der Transportbahn mit einem magnetischen Linearantrieb, z. B. in Form eines asynchronen Linearmotors, ausgestattet sein. Dazu wird der entsprechende Abschnitt der Transportbahn mit einer Vielzahl von elektrischen Wicklungen in Form von einzeln ansteuerbaren Elektromagneten ausgerüstet. Um eine magnetische Wechselwirkung zwischen einem Transportelement und den einzeln ansteuerbaren Elektromagneten der Transportbahn zu erzeugen, kann das Transportelement mit einem oder mehreren Permanentmagneten bzw. nicht schaltenden Elektromagneten oder Eisenkernen ausgestattet werden. In einer möglichen Ausführung ist das Transportelement als ein passives Transportelement ausgeführt, welches durch Wechselwirkung mit den von den einzeln ansteuerbaren Elektromagneten der Transportbahn erzeugten elektromagnetischen Wechselfeldern bewegt wird. Der mindestens eine Permanentmagnet bzw. nicht schaltende Elektromagnet bzw. Eisenkern des Transportelements bildet somit das oben erwähnte Reaktionselement, während die einzeln ansteuerbaren Elektromagnete der Transportbahn die oben erwähnten Wechselwirkungselemente bilden. Bevorzugt ist bei Verwendung von passiven Transportelementen eine Lokalisierungseinheit an der Transportbahn angebracht, um die Lage wenigstens eines Transportelements und bevorzugt aller Transportelemente zu ermitteln und an die Steuer- und/oder Regeleinheit zur Steuerung der Elektromagnete der Transportbahn weiterzugeben. Die Stromstärke durch die elektrischen Wicklungen der Transportbahn kann von der Steuer- und/oder Regeleinheit in Abhängigkeit von einem Kraftbedarf des zu bewegenden Transportelements automatisch angepasst werden.

Durch individuelles Steuern und/oder Regeln der Stromstärke durch einzelne Wicklungen der Transportbahn kann das Transportelement beschleunigt, abgebremst oder mit einer konstanten vorgegebenen Geschwindigkeit bewegt werden.

Bei einer alternativen Ausführungsform ist das Transportelement als aktives Transportelement mit elektrischen Wicklungen versehen, welche die für den Antrieb notwendigen magnetischen Wechselfelder aufbringen können. Entsprechend wird der Abschnitt der Transportbahn mit Permanentmagneten bzw. nicht schaltenden Elektromagneten versehen. Hierbei können sowohl die für den Antrieb nötige elektrische Energie als auch für die Steuerung nötige Signale via Induktionsübertragung an die Transportelemente übertragen werden. Die Steuerung kann sich demnach dezentral auf den jeweiligen Transportelementen befinden oder auch zentral in einer eigenen Steuereinheit untergebracht sein. Alternativ dazu kann die nötige elektrische Energie über eine entlang der Transportbahn angeordnete Leitung an die Transportelemente übertragen werden. Des Weiteren ist eine Kombination der Ausführung der Transportelemente als aktive Transportelemente mit einer Transportbahn mit einzeln ansteuerbaren Elektromagneten denkbar.

Neben dem oben beschriebenen, als Magnettrasse ausgebildeten Teil der Transportbahn kann die Transportbahn weiterhin wenigstens eine Teilstrecke umfassen, entlang derer das Transportelement mit einer konstanten Geschwindigkeit bewegt werden kann. Die Teilstrecke kann hierzu eine Antriebsvorrichtung in Form eines Transportbandes, einer Transportkette oder von Ähnlichem umfassen. Durch Kombination von Teilstrecken mit Magnetantrieb und Teilstrecken mit einem mechanischen Antrieb können die Installationskosten der gesamten Transporteinrichtung gesenkt werden. Insbesondere kann eine solche Teilstrecke mit einem mechanischen Antrieb zumindest Teil der Verbindung der Wartungsvorrichtung mit der Transportbahn sein.

In einer weiteren Weiterbildung kann das Transportelement vollständig magnetisch oder teilweise magnetisch und teilweise mechanisch oder vollständig mechanisch an der Transportbahn gelagert sein. Bei vollständig magnetischer Lagerung ist der oben beschriebene Teil der Transportbahn als Magnetschwebebahn ausgebildet, wobei elektrische Wicklungen in der Transportbahn und/oder dem Transportelement vorgesehen sind, welche eine magnetische Levitation des Transportelements über der Transportbahn bewirken. Dadurch lässt sich die Reibung zwischen dem Transportelement und der Transportbahn auf ein Minimum reduzieren. Bei teilweise magnetischer und teilweise mechanischer Lagerung kann das Transportelement zusätzlich ein oder mehrere Stützelemente, z. B. in Form von Stützrollen und/oder Führungsrollen aufweisen. Ebenso ist eine teilweise oder vollständig mechanische Lagerung mittels mindestens eines Gleitlagers denkbar. Die zusätzlichen Stützelemente bzw. Gleitlager rollen bzw. gleiten dabei auf einer Lauffläche der Transportbahn. Bei vollständig mechanischer Lagerung kann das Transportelement ausschließlich durch das beschriebene mindestens eine Stützelement bzw. Gleitlager gelagert sein. Ergänzend oder alternativ hierzu kann eine Lagerung auch pneumatisch erfolgen, wobei die Transportbahn in dem entsprechenden Teilstück als Luftschwebebahn ausgeführt ist. Bei pneumatischer Lagerung ergibt sich, wie auch bei vollständig magnetischer Lagerung, eine Minimierung der Reibung zwischen dem Transportelement und der Transportbahn. Ein möglichst günstiges Führungs- und Lagersystem kann beispielsweise mittels eines Gleitlagers realisiert werden.

Gemäß einer Weiterbildung kann die Transportbahn der erfindungsgemäßen Transporteinrichtung eine Hauptstrecke und eine Nebenstrecke umfassen, wobei die Wartungsvorrichtung an der Nebenstrecke angeordnet ist, und wobei die Nebenstrecke mit der Hauptstrecke über mindestens eine Weiche zum Ausschleusen des Transportelements aus der Hauptstrecke und/oder Einleiten des Transportelements in die Hauptstrecke verbunden ist.

Im Allgemeinen gehört das mindestens eine Transportelement zu einer Vielzahl von Transportelementen, welche einen Strom, d. h. einen kontinuierlichen Fluss an Transportelementen in eine von der Steuer- und/oder Regeleinheit vorgegebenen Richtung entlang zumindest eines Teils der Transportbahn bilden. Dabei kann die Vielzahl von Transportelementen neben den Transportelementen zum Transportieren eines oder mehrerer Behälter auch Transportelemente mit Sonderfunktionen umfassen. Ein solcher Strom an Transportelementen kann beispielsweise eine erste Behälterbehandlungseinheit, welche einen ersten Prozessschritt an den transportierten Behältern durchführt, mit einer zweiten Behälterbehandlungseinheit, welche einen weiteren, darauf folgenden Prozessschritt an den Behältern durchführt, verbinden. Ebenso kann ein solcher Strom einen der oben beschriebenen Zuförderer mit einer Behälterbehandlungseinheit verbinden und/oder eine Behälterbehandlungseinheit mit einem der oben beschriebenen Abförderer verbinden. Schließlich kann ein solcher Strom über eine Rückführstrecke als Teil des oben erwähnten geschlossenen Kreislaufs den Abförderer wieder mit dem Zuförderer verbinden, um den Kreislauf der Transportelemente zu schließen. Die oben genannte Hauptstrecke entspricht somit einem Teil der Transportbahn, entlang dessen sich der Strom von Transportelementen, z. B. zwischen zwei Behälterbehandlungseinheiten, bewegt. Die Hauptstrecke ist somit Teil der Prozessstrecke zur Behandlung der Behälter in der Behälterbehandlungsanlage. Erfindungsgemäß kann eine Prozessstrecke je nach Layout der Behälterbehandlungsanlage auch mehr als eine Hauptstrecke umfassen, insbesondere bei paralleler Anordnung von identischen bzw. äquivalenten Behälterbehandlungseinheiten.

Erfindungsgemäß umfasst die Transportbahn neben der mindestens einen Hauptstrecke auch eine Nebenstrecke, welche nicht dem Führen des Primärstroms an Transportelementen als Teil der Prozessstrecke dient. Unter Prozessstrecke ist hier und im Folgenden der Teil der Behälterbehandlungsanlage zu verstehen, welcher der Behandlung der Behälter dient und Zuförderer, Abförderer, Behälterbehandlungseinheiten sowie die sie verbindenden Teile der Transporteinrichtung umfasst. Insbesondere umfasst die Prozessstrecke mindestens eine Rückführstrecke zum Rückführen der Vielzahl von Transportelementen von dem mindestens einen Abförderer zu dem mindestens einen Zuförderer. Von der Hauptstrecke werden einzelne Transportelemente im Allgemeinen lediglich zum Durchführen individueller Verfahrensschritte, wie z. B. Wartung und/oder Prüfung der Transportelemente oder der transportierten Behälter, auf eine Nebenstrecke geleitet. Gemäß der hier beschriebenen Weiterbildung kann die Wartungsvorrichtung an einer solchen Nebenstrecke angeordnet sein, wobei die Nebenstrecke mit der Hauptstrecke über mindestens eine Weiche verbunden ist. In Abhängigkeit von dem mindestens einen Zustandsparameter des Transportelements kann die Steuer- und/oder Regeleinheit ein zu wartendes Transportelement durch Schalten der mindestens einen Weiche aus der Hauptstrecke ausschleusen und über die Nebenstrecke der Wartungsvorrichtung zu führen. Ebenso kann die Steuer- und/oder Regeleinheit nach Wartung des Transportelements durch die Wartungsvorrichtung das Transportelement über dieselbe oder eine weitere Weiche wieder in den Strom der Transportelemente entlang der Hauptstrecke einfügen. Vorteilhafterweise kann die Nebenstrecke, an welcher die Wartungsvorrichtung angeordnet ist, in der Art einer Boxengasse für die Transportelemente über jeweils eine Weiche zum Ausschleusen und zum Einleiten der Transportelemente mit der Hauptstrecke verbunden sein. Besonders vorteilhafterweise kann die Hauptstrecke wie oben beschrieben eine Rückführstrecke umfassen, wobei die Nebenstrecke, entlang derer die Wartungsvorrichtung angeordnet ist, über die mindestens eine Weiche mit der Rückführstrecke verbunden ist. Im Allgemeinen werden die Transportelemente vor dem Rückführen über die Rückführstrecke von den von ihnen transportierten Behältern entladen, so dass bei der oben beschriebenen Anordnung eine Wartung der Transportelemente im entladenen Zustand stattfinden kann. Die Steuer- und/oder Regeleinheit der Transporteinrichtung kann derart ausgebildet sein, dass sie sowohl die elektrischen Wicklungen der Transportbahn und/oder der Transportelemente individuell steuert und/oder regelt als auch die Stellung der einen oder mehreren Weichen entlang der Transportbahn steuert. Dabei kann die Steuer- und/oder Regelung der Elektromagnete der Transportbahn und/oder der Transportelemente sowie der Weichen insbesondere in Abhängigkeit von dem mindestens einen Zustandsparameter der Transportelemente sowie den Positionen der Transportelemente entlang der Transportbahn erfolgen.

Gemäß einer Weiterbildung kann die Wartungsvorrichtung mindestens eine Vorrichtung aus der Gruppe umfassen, die gebildet wird von einer Reinigungsvorrichtung, einer Sterilisationsvorrichtung, einer Schmiervorrichtung, einer Reparaturvorrichtung, einer Umbauvorrichtung, einer Wechselvorrichtung für Verschleißteile und einer Wechselvorrichtung für Formatteile. In einer Reinigungsvorrichtung können das Transportelement oder Teile desselben, wie z. B. die Lagerfläche eines Gleitlagers, beispielsweise mit einer Bürste und/oder mit Druckluft aus einer Luftdüse gereinigt werden. Mittels eines UV-Strahlers oder einer Heizvorrichtung können das Transportelement oder Teile desselben in einer Sterilisationsvorrichtung entkeimt werden. In einer Schmiervorrichtung können gezielt die Lagerstellen und/oder Laufflächen des Transportelements, insbesondere nach einer vorhergehenden Reinigung, mit einem Schmiermittel beaufschlagt werden. In einer Reparaturvorrichtung können beschädigte Teile des Transportelements repariert werden. In einer Umbauvorrichtung hingegen können Teile des Transportelements durch in der Wartungsvorrichtung vorrätig gehaltene alternative Bauteile ersetzt werden. In einer Wechselvorrichtung für Verschleißteile schließlich können Verschleißteile wie Gleitlager oder Stützelemente und in einer Wechselvorrichtung für Formatteile können Formatteile wie Greif- und Haltevorrichtungen durch in der Wartungsvorrichtung vorrätig gehaltene Verschleißteile bzw. Formatteile ersetzt werden. Dabei können die Verschleißteile bzw. Formatteile durch identische oder auch durch alternative Verschleißteile bzw. Formatteile ersetzt werden.

Es versteht sich, dass die Wartungsvorrichtung erfindungsgemäß auch eine Kombination mehrerer Vorrichtungen aus der oben genannten Gruppe umfassen kann. Insbesondere kann nach einer Reinigung und Entkeimung des Transportelements mittels einer Reinigungsvorrichtung und einer Sterilisationsvorrichtung ein Abschmieren der Laufflächen bzw. Lagerstellen des Transportelements mittels der Schmiervorrichtung erfolgen. Die Wartungsvorrichtung kann dabei auch zur simultanen Wartung mehrerer Transportelemente ausgelegt sein. Dabei erweist sich ein synchrones Bewegen des Transportelements und des jeweiligen Funktionselements der Wartungsvorrichtung, z. B. einer Bürste oder einer Luftdüse, entlang einer Wartungsstrecke, analog dem Prinzip einer Autowaschanlage mit Förderband, als besonders effektiv. Die Steuer- und/oder Regeleinheit der Transporteinrichtung kann erfindungsgemäß derart ausgebildet sein, dass sie die durchzuführenden Wartungsschritte sowie deren Dauer und/oder Intensität in Abhängigkeit von dem mindestens einen Zustandsparameter des zu wartenden Transportelements durchführt. Insbesondere kann die Steuer- und/oder Regeleinheit sowohl den Transport der zu wartenden Transportelemente durch die Wartungsvorrichtung als auch die Funktionselemente der Wartungsvorrichtung steuern. Vorteilhafterweise kann dabei das Durchführen der Wartungsprozesse semiautomatisch oder vollautomatisch erfolgen. Ergänzend können einzelne Wartungsschritte jedoch auch manuell vorgenommen werden. Bei einer manuellen Wartung kann das Transportelement aus der Führung der Nebenstrecke genommen werden, wobei beispielsweise Verschleißteile vorzugsweise werkzeuglos, insbesondere mittels Clips, getauscht werden können.

Gemäß einer speziellen Weiterbildung, in welcher die Wartungsschritte zumindest semiautomatisch vorgenommen werden, können die Wechselvorrichtung für Verschleißteile und/oder die Wechselvorrichtung für Formatteile mindestens einen Montageroboter und ein Magazin für Verschleißteile und/oder Formatteile aufweisen, wobei der Montageroboter dazu ausgebildet ist, ein Verschleißteil und/oder ein Formatteil des Transportelements automatisch durch ein Verschleißteil und/oder Formatteil aus dem Magazin zu ersetzen. Der Montageroboter kann hierbei von der Steuer- und/oder Regeleinheit der Transporteinrichtung oder einer separaten Steuereinheit gesteuert werden. Das Magazin für Verschleißteile und/oder Formatteile kann modular ausgebildet sein, so dass ein möglichst einfacher Austausch durch Koppeln an bzw. Entkoppeln von der Wartungsvorrichtung denkbar ist. Wie die bereits oben erwähnten Funktionselemente der Wartungsvorrichtung kann auch der Montageroboter zur Steigerung der Effizienz mit dem zu wartenden Transportelement entlang der Nebenstrecke in der Wartungsvorrichtung bewegt werden. Unterschiedliche Formatteile, z. B. unterschiedliche Ausführungen des Greifelements, können einerseits in separaten Magazinen zur Verfügung gestellt werden, oder auch mittels gesonderter Identifikationseinheiten, wie Strichcodes, gemeinsam in einem Magazin zur Verfügung gestellt werden, wobei der Montageroboter eine Identifikationserfassungsvorrichtung zum Lesen der Identifikationseinheiten der Formatteile aufweist. Somit kann durch Austausch eines Formatteils durch ein alternativ ausgeführtes Formatteil mittels des Montageroboters ein Umbau des Transportelements in der Wartungsvorrichtung vorgenommen werden. Zur Kostenersparnis kann es günstig sein, bei einem Produktwechsel nicht das gesamte Transportelement, sondern lediglich produktspezifische Formatteile, wie das Greifelement, in der Wartungsvorrichtung auszutauschen.

Alternativ oder ergänzend kann die Wartungsvorrichtung ein Magazin für Transportelemente aufweisen, welches insbesondere als Einheit an die Wartungsvorrichtung koppelbar ist. Insbesondere kann das Magazin auf Rädern stehen und bei Bedarf an die Wartungsvorrichtung an- bzw. abgedockt werden. Der Transport im Magazin kann dabei mittels der oben beschriebenen magnetischen Wechselwirkung oder auch mittels eines im Stand der Technik bekannten herkömmlichen Antriebs vonstatten gehen. Der anfangs erwähnte mindestens eine Zustandsparameter des Transportelements kann somit auch zum Auszeichnen eines Transportelements für einen Umbau, z. B. bei einem Produktwechsel, verwendet werden. Dabei wird gemäß der hier beschriebenen Weiterbildung nicht nur ein Formatteil des Transportelements, sondern das gesamte Transportelement durch ein für das neue Produkt ausgelegtes Transportelement aus dem Magazin ersetzt. Das dauerhaft ausgeschleuste vorherige Transportelement kann dabei im Magazin verbleiben und zusammen mit diesem zu einem späteren Zeitpunkt von der Wartungsvorrichtung abgedockt werden.

Gemäß einer Weiterbildung kann die Wartungsvorrichtung mit der Transportbahn gemäß dem First In - First Out, FIFO, Prinzip verbunden sein. Dies kann insbesondere durch Bereitstellen einer separaten Weiche zum Ausschleusen bzw. zum Einleiten der Transportelemente aus bzw. in die Hauptstrecke realisiert werden. Ein mittels der Steuer- und/oder Regeleinheit ausgeschleustes Transportelement tritt somit über die erste Weiche in die Wartungsvorrichtung ein und wird über die zweite Weiche, gemäß dem FIFO-Prinzip, wieder in den Strom der Transportelemente eingeführt.

Durch das Bereitstellen einer Wartungsvorrichtung für Transportelemente, insbesondere an einer Nebenstrecke der Transporteinrichtung, kann ein sicherer Betrieb der Transporteinrichtung und somit der gesamten Behälterbehandlungsanlage gewährleistet werden, ohne dass ein großer Bedieneraufwand nötig wäre. Zudem kann ein sehr schneller Produktwechsel bzw. Formatwechsel der Behälter, insbesondere mittels einer Umbau- bzw. Wechselvorrichtung der Wartungsvorrichtung ermöglicht werden.

Die vorliegende Erfindung stellt auch eine Transporteinrichtung zum Transport von Behältern in einer Behälterbehandlungsanlage zur Verfügung, welche umfasst:
eine Transportbahn,
mindestens ein Transportelement zum Transportieren eines oder mehrerer Behälter, das bewegbar an der Transportbahn angeordnet ist,
eine Steuer- und/oder Regeleinheit, und
eine Prüfvorrichtung,
wobei die Transportbahn und das Transportelement derart ausgestaltet sind, dass das Transportelement mittels der Steuer- und/oder Regeleinheit einzeln steuerbar entlang der Transportbahn geführt werden kann, und
wobei die Prüfvorrichtung erfindungsgemäß dazu ausgebildet ist, mindestens einen Zustandsparameter des Transportelements zu bestimmen.

Hierbei können dieselben Variationen und Weiterbildungen, die oben im Zusammenhang mit der Transporteinrichtung mit einer Wartungsvorrichtung beschrieben wurden, auch auf die Transporteinrichtung mit der Prüfvorrichtung angewendet werden. Insbesondere kann die Transporteinrichtung zusätzlich zu der Prüfvorrichtung die oben beschriebene Wartungsvorrichtung für das Transportelement, welche mit der Transportbahn verbunden ist, aufweisen. Zudem kann der von der Prüfvorrichtung bestimmte mindestens eine Zustandsparameter des Transportelements dem Zustandsparameter des Transportelements entsprechen, in Abhängigkeit dessen die Steuer- und/oder Regeleinheit das Transportelement der Wartungsvorrichtung zuführt.

Je nach zu bestimmendem Zustandsparameter kann die Prüfvorrichtung beispielsweise eine Lese- bzw. Identifikationserfassungsvorrichtung zum Lesen bzw. Erfassen einer Identifikationseinheit des Transportelements, eine Messvorrichtung zum Prüfen von Verschleißteilen des Transportelements und/oder eine Teststation zum Testen von Funktionselementen, z. B. des Greifelements, des Transportelements aufweisen. Im ersten Fall kann die Prüfvorrichtung beispielsweise eine Standzeit des Transportelements durch Auslesen einer in einer Speichereinheit der Identifikationseinheit des Transportelements gespeicherten Zeit bzw. Zeitmarke, welche der gesamten Laufzeit des Transportelements seit der letzten Wartung bzw. seit Einsetzen in die Transporteinrichtung bzw. dem Zeitpunkt der letzten Wartung bzw. des Einsetzens in die Transporteinrichtung entspricht, bestimmen. Ebenso kann von der Prüfvorrichtung durch Lesen aus einer Speichereinheit einer Identifikationseinheit des Transportelements die Anzahl der Umläufe des Transportelements in einem Kreislauf der Transporteinrichtung seit der letzten Wartung bzw. seit Einsetzen des Transportelements in die Transporteinrichtung bestimmt werden. Eine Vielzahl anderer Zustandsparameter, welche von der Prüfvorrichtung bestimmt werden können, sind denkbar, insbesondere solche, welche den Typ des Transportelements, z. B. als geeignet für einen speziellen Behältertyp bzw. ein spezielles Produkt, kennzeichnen. Zur Identifikation bestimmter Formatteile des Transportelements kann die Prüfvorrichtung beispielsweise eine Lesevorrichtung für eindeutige, die speziellen Formatteile kennzeichnende Strichcodes umfassen.

Die Prüfvorrichtung kann entlang einer der oben beschriebenen Hauptstrecken der Transportbahn oder auch entlang einer speziell für die Prüfung von Transportelementen vorgesehenen Nebenstrecke angeordnet sein. Insbesondere kann die Prüfvorrichtung als Teil der Hauptstrecke bzw. der Nebenstrecke ausgebildet sein. Bei Anordnen der Prüfvorrichtung entlang einer Nebenstrecke kann die Prüfvorrichtung insbesondere einer ebenfalls vorhandenen Wartungsvorrichtung vorgeschaltet sein, wobei die Steuer- und/oder Regeleinheit geprüfte Transportelemente in Abhängigkeit von einem Ergebnis der Prüfung durch die Prüfvorrichtung der Wartungsvorrichtung zur Wartung zuführt oder an dieser vorbei in die Hauptstrecke zurückführt. Das Ausleiten von Transportelementen aus der Hauptstrecke, z. B. über eine gesteuerte Weiche bzw. einen gesteuerten Entnahmemechanismus, kann hierbei mittels der Steuer- und/oder Regeleinheit gesteuert werden. Insbesondere kann die Steuer- und/oder Regeleinheit dergestalt ausgebildet sein, dass einzelne Transportelemente nach einem vorgegebenen Zufallsprinzip aus dem Strom der Transportelemente zur Prüfung durch die Prüfvorrichtung ausgeschleust werden. Alternativ oder ergänzend hierzu kann die Steuer- und/oder Regeleinheit der Transporteinrichtung Transportelemente, welche in einer vorgegebenen Weise auffällig geworden sind, z. B. durch Fehler bei der Übergabe an Zu- bzw. Abförderern oder bei der Behandlung der transportierten Behälter in einer Behälterbehandlungseinheit, aus dem Strom der Transportelemente ausschleusen und der Prüfvorrichtung für eine eingehende Prüfung zuführen. Somit können statistisch fehlerhafte Transportelemente rechtzeitig erfasst bzw. auftretende Fehlfunktionen der Transportelemente eingehender untersucht und gegebenenfalls mittels einer entsprechenden Wartungsvorrichtung behoben werden. Das Anordnen der Prüfvorrichtung entlang bzw. als Teil der Hauptstrecke wird dabei als Inline-Anordnung bezeichnet. Bei der Inline-Anordnung kann je nach Vorgabe durch das Bedienungspersonal entweder jedes oder jedes n-te Transportelement mit ganzzahligem n größer 1, welches die Prüfvorrichtung passiert, bezüglich des mindestens einen Zustandsparameters geprüft werden.

Gemäß einer Weiterbildung kann das Transportelement zumindest teilweise mechanisch an der Transportbahn gelagert sein,
wobei der mindestens eine Zustandsparameter einen Verschleißgrad eines Lagerelements des Transportelements umfasst,
wobei die Prüfvorrichtung einen Teil der Transportbahn, welcher eine Vielzahl von Wechselwirkungselementen und eine Vielzahl von entlang der Transportbahn angeordneten Sensoren, insbesondere Magnetfeldsensoren, zur Bestimmung einer Position des Transportelements entlang der Transportbahn aufweist, und eine Messvorrichtung umfasst, und
wobei die Messvorrichtung dazu ausgebildet ist, mittels der Wechselwirkungselemente und/oder Sensoren einen Reibungskoeffizienten für eine Bewegung des Transportelements entlang der Transportbahn zu bestimmen.

Die zumindest teilweise mechanische Lagerung des Transportelements an der Transportbahn kann wie oben beschrieben mittels mechanischer Lagerelemente, wie z. B. Stützelementen, Stützrollen und/oder Gleitlager, erfolgen. Ein solches Lagerelement unterliegt aufgrund der zumindest teilweise mechanischen Lagerung einem mit der Zeit fortschreitenden Verschleiß, insbesondere durch Abrieb, Aufrauen und/oder Korrosion, welcher durch einen geeignet gewählten Verschleißgrad quantifiziert werden kann. Der Verschleißgrad des Lagerelements wirkt sich dabei unmittelbar auf den Reibungskoeffizienten des Lagerelements bei einer Bewegung des Transportelements entlang der Transportbahn aus. Zunehmender Verschleiß des Lagerelements führt dabei im Allgemeinen zu einer Zunahme des Reibungskoeffizienten und dadurch zu einem erhöhten Kraftaufwand für das Bewegen des Transportelements entlang der Transportbahn mit einer vorgegebenen Geschwindigkeit.

Um einem unnötigen Energieverbrauch durch einen aufgrund des Verschleißes erhöhten Reibungskoeffizienten entgegen zu wirken, umfasst die Prüfvorrichtung gemäß einem Aspekt der Erfindung einen Teil der Transportbahn und eine Messvorrichtung, wobei der Teil der Transportbahn eine Vielzahl von Wechselwirkungselementen und eine Vielzahl von entlang der Transportbahn angeordneten Sensoren, insbesondere Magnetfeldsensoren, zur Bestimmung einer Position des Transportelements entlang der Transportbahn aufweist. Die Wechselwirkungselemente können hierbei insbesondere durch die weiter oben beschriebenen Wechselwirkungselemente zum Bewegen des Transportelements mittels einer magnetischen Kraft gegeben sein. Dabei werden die Wechselwirkungselemente der Transportbahn, welche insbesondere als elektrische Wicklungen ausgebildet sein können, durch die Steuer- und/oder Regeleinheit im Allgemeinen automatisch mit einem elektrischen Strom beaufschlagt, welcher dazu geeignet ist, das Transportelement mit einer gewünschten Geschwindigkeit bzw. Beschleunigung entlang der Transportbahn zu bewegen. Bei unzureichender Stromstärke bzw. bei erhöhter Reibung tritt dabei ein sogenannter Schleppfehler des Linearmotors auf, welcher durch die Wechselwirkungselemente der Transportbahn gebildet wird. Dieser Schleppfehler kann insbesondere durch die Vielzahl von entlang der Transportbahn angeordneten Sensoren zur Bestimmung einer Position des Transportelements bestimmt werden.

Insbesondere kann durch regelmäßige und periodische Anordnung von Sensoren entlang des Teils der Transportbahn die Position eines Transportelements auf diesem Teil der Transportbahn bestimmt werden. Dabei kann der Sensor als optischer Sensor, elektrischer Sensor, elektromagnetischer Sensor oder mechanischer Sensor ausgebildet sein, wobei z. B. durch Messen einer Lichtreflektion an einem Reflektorelement des Transportelements, durch Induktion eines elektromagnetischen Signals aufgrund der Bewegung des Transportelements, durch Änderung des elektrischen Widerstandes des Sensors unter Ausnutzung eines magnetoresistiven Effektes, z. B. aufgrund des magnetischen Flusses eines magnetischen Referenzelements, insbesondere eines Permanentmagneten, oder des Reaktionselements des Transportelements, oder durch lokale Druckmessung aufgrund des Gewichts des Transportelements die Position des Transportelements im Bereich des Sensors bestimmt werden kann. Ein elektromagnetischer Sensor kann dabei als Hallsensor ausgebildet sein, welcher auch dann ein Signal liefert, wenn das Magnetfeld, in dem er sich befindet, konstant ist. Ebenso ergibt sich bei der Ausführung eines elektromagnetischen Sensors als Magnetfeldsensor auf der Grundlage magnetoresistiver Effekte, wie des anisotropen magnetoresistiven Effekts (AMR-Effekt), des "gigantischen" magnetoresistiven Effekts (GMR-Effekt), sowie weiterer magnetoresistiver Effekte wie des CMR-Effekts und des TMR-Effekts, eine Änderung des elektrischen Widerstandes, welche abhängig von dem zu messenden Magnetfeld ist. Sowohl Hallsensoren als auch magnetoresistive Sensoren erlauben somit das Bestimmen der Position eines Transportelements entlang der Transportbahn auch ohne induktive Effekte, d. h. auch bei stillstehendem Transportelement. Dabei detektiert der entsprechende Sensor eine lokale Veränderung des Hintergrundmagnetfelds durch das Reaktionselement, insbesondere durch einen daran angebrachten Permanent- bzw. Elektromagneten, des Transportelements. Alternativ oder zusätzlich kann das mindestens eine Transportelement eine Signaleinheit aufweisen, welche ein Positionssignal erzeugt. Das Positionssignal kann dann durch geeignete Detektoren im Bereich der Transporteinrichtung lokalisiert werden, um die Position des Transportelements entlang der Transportbahn zu bestimmen. Diese Signaleinheit des Transportelements kann insbesondere als RFID-Chip ausgebildet sein.

Gemäß der vorliegenden Weiterbildung kann die Messvorrichtung der Prüfvorrichtung dazu ausgebildet sein, mittels der Wechselwirkungselemente und/oder Sensoren einen Reibungskoeffizienten für eine Bewegung des Transportelements entlang der Transportbahn zu bestimmen. Dies kann einerseits dadurch geschehen, dass der Strom in den Wicklungen der Wechselwirkungselemente derart geregelt wird, dass sich das Transportelement mit einer vorgegebenen Geschwindigkeit entlang der Transportbahn bewegt, und die dazu benötigte Stromstärke durch die Prüfvorrichtung mit einer von Gewicht und Lagerung des Transportelements abhängigen Soll-Stromstärke verglichen wird. Überschreitet die benötigte Stromstärke einen vorgegebenen Schwellwert, so ist die Lagerung zu einem gewissen Grad verschlissen, welcher somit als Zustandsparameter des Transportelements von der Prüfvorrichtung erfasst wird. Alternativ kann die Prüfvorrichtung das Transportelement sich entlang des Teils der Transportbahn frei bewegen lassen und aus dem Abbremsverhalten des Transportelements bzw. aus der Endposition des Transportelements nach Stillstand den Reibungskoeffizienten des Lagerelements bestimmen. Auch hier kann durch die Prüfvorrichtung wieder ein Vergleich des bestimmten Reibungskoeffizienten mit einem Schwellwert vorgenommen werden. Bei Überschreiten des Schwellwertes kann die Prüfvorrichtung ein entsprechendes Signal an die Steuer- und/oder Regeleinheit der Transporteinrichtung senden, welche im Gegenzug das betroffene Transportelement zur Wartung der Wartungsvorrichtung zuführt, in welcher z. B. mittels einer Schmiervorrichtung bzw. Wechselvorrichtung für Verschleißteile eine Schmierung des Lagers bzw. ein Austausch des Lagerelements vorgenommen werden kann.

Gemäß einem Aspekt der Erfindung ist das Transportelement zumindest teilweise mittels mindestens eines Gleitlagers an einer Führungsschiene der Transportbahn gelagert, wobei der mindestens eine Zustandsparameter eine Dicke des Gleitlagers, einen Abrieb des Gleitlagers, einen Abstand eines Gehäuses des Transportelements von der Führungsschiene und/oder einen Wert für das Spiel des Gleitlagers umfasst, und
wobei die Prüfvorrichtung einen Teil der Transportbahn umfasst, welcher mindestens einen Sensor zur Messung des Zustandsparameters, insbesondere mittels mechanischer, kapazitiver, induktiver und/oder optischer Abstandsmessung, aufweist.

Eine Lagerung des Transportelements mittels Gleitlager an einer bereits oben erwähnten Führungsschiene der Transportbahn ist besonders preisgünstig, aber im Allgemeinen auch besonders verschleißanfällig. Bei Verwendung einer Gleitlagerung sind nicht nur die Reibungskoeffizienten allein aussagekräftig für den Zustand des Lagers, sondern auch der Abrieb des Gleitlagers. Dieser kann mit der Prüfvorrichtung gemäß der vorliegenden Weiterbildung auf unterschiedliche Weise bestimmt werden. Zum Beispiel kann an einer vorgegebenen Stelle des Teils der Transportbahn, welcher zu der Prüfvorrichtung gehört, ein Sensor verbaut sein, welcher einen Abstand zwischen einem Gehäuse des Transportelements und der Führungsschiene misst, um daraus z. B. die Dicke des Gleitlagers bzw. einen Abrieb des Gleitlagers zu bestimmen. Eine solche Abstandsmessung kann mittels der im Stand der Technik bekannten mechanischen, kapazitiven, induktiven und/oder optischen Verfahren erfolgen. Bei einer mechanischen Abstandsmessung kann z. B. ein Taster an der Transportbahn oder am Transportelement betätigt werden, wenn der Abstand einen Schwellwert unterschreitet. Eine optische Abstandsmessung kann z. B. durch Lasertriangulation oder Laserinterferrometrie erfolgen. Ebenso kann der Abstand kapazitiv oder induktiv, z. B. mittels eines Wirbelstromsensors, ermittelt werden. Dabei ist die Verwendung eines Wirbelstromsensors in Kombination mit einem elektromagnetischen Linearantrieb durch die oben beschriebenen periodisch angeordneten elektrischen Wicklungen entlang der Transportbahn besonders vorteilhaft, da aufgrund der relativen Bewegung des Transportelements entlang der Transportbahn Wirbelströme in elektrisch leitenden Komponenten des Transportelements gebildet werden, welche der Bewegung des Transportelements entgegenwirken. Aus einem Schleppfehler des Transportelements bzw. einem Fehlerstrom in den Wechselwirkungselementen der Transportbahn kann somit auf einfache Weise der Abstand des Gehäuses des Transportelements von der Führungsschiene bestimmt werden.

Alternativ dazu kann mit einem an einer bestimmten Stelle des Teils der Transportbahn angeordneten Sensor zur Abstandsmessung auch die Dicke des Gleitlagers direkt gemessen werden. Ebenfalls denkbar ist ein optisches System mit Bildverarbeitung durch eine Prozesseinheit der Prüfvorrichtung oder der Steuer- und/oder Regeleinheit, welche aus einem Foto des die Prüfvorrichtung passierenden Transportelements, insbesondere seines Gleitlagers, den Abstand des Gehäuses bzw. die Dicke des Gleitlagers ermittelt. Ebenso kann ein zwei- oder mehrfarbiges Gleitlager verwendet werden, bei dem nach Erreichen eines gewissen Abriebs eine andere Farbe zum Vorschein kommt, welche mittels des optischen Systems detektiert werden kann.

Durch Vergleich des so bestimmten Abriebs, Abstands bzw. der Dicke des Gleitlagers mit einem vorgegebenen Schwellwert durch die Steuer- und/oder Regeleinheit der Transporteinrichtung, kann das Transportelement bei Bedarf einer Wartungsvorrichtung zum Austausch des Gleitlagers zugeführt werden. Durch regelmäßige Überwachung des Abriebs des Gleitlagers der passierenden Transportelemente durch die Prüfvorrichtung und anschließende Wartung der zu wartenden Transportelemente in der Wartungsvorrichtung kann somit eine unerwünschte Zunahme des Reibungskoeffizienten und damit ein unnötiger Energieverbrauch der Transporteinrichtung vermieden werden.

Gemäß einem Aspekt der Erfindung ist das Transportelement zumindest teilweise mittels mindestens eines Rolllagers an einer Führungsschiene der Transportbahn gelagert, wobei der mindestens eine Zustandsparameter eine Rotationsgeschwindigkeit des Rolllagers, eine Lautstärke eines Rollgeräuschs des Rolllagers und/oder einen Wert für eine Wärmeemission des Rolllagers umfasst, und
wobei die Prüfvorrichtung einen Teil der Transportbahn umfasst, welcher mindestens einen Sensor zur Messung des Zustandsparameters, insbesondere eine optische Kamera, einen piezoelektrischen Sensor, eine Thermographie-Kamera und/oder ein Pyrometer aufweist.

Eine Lagerung des Transportelements mittels Rolllager an einer bereits oben erwähnten Führungsschiene, d. h. mittels Rollen, welche auf der Führungsschiene und/oder einer Lauffläche abrollen, ist weniger verschleißanfällig als eine Lagerung mittels Gleitlager. Jedoch kann ein Verschleiß des Rolllagers dazu führen, dass das Rolllager nicht mehr korrekt abrollt oder sogar schleift. In diesem Fall ist die Rotationsgeschwindigkeit des Rolllagers gegenüber einem unverschlissenen Rolllager reduziert. Durch Abgleich einer gemessenen Rotationsgeschwindigkeit des Rolllagers mit von der Geschwindigkeit des Transportelements abhängigen Sollrotationsgeschwindigkeit kann ein Verschleiß des Rolllagers detektiert werden. Somit kann der Zustandsparameter insbesondere einen Wert für die Rotationsgeschwindigkeit des Rolllagers umfassen.

Die Rotationsgeschwindigkeit des Rolllagers kann beispielsweise mittels einer optischen Kamera durch Aufnahme einer Vielzahl von Bildern in kurzer Zeitabfolge bestimmt werden, wobei eine Prozesseinheit der Prüfvorrichtung aus den aufgenommen Bildern jeweils die Winkelposition des Rolllagers bestimmt und aus den bestimmten Winkelpositionen die Rotationsgeschwindigkeit berechnet. Zur leichteren Bestimmung der Winkelposition können am Rolllager optische Markierungen angebracht sein. Durch Abgleich der Ist- zur Sollrotationsgeschwindigkeit kann dann bestimmt werden, ob das Rolllager korrekt abrollt oder schleift.

Des Weiteren kann ein Verschleiß des Rolllagers auch durch eine sensorische Zustandsprüfung des Rolllagers, beispielsweise mittels eines piezoelektrischen Sensors erfolgen, welcher Vibrationen oder Rollgeräusche eines vorbeirollenden Rolllagers aufnimmt und diese einem Ist/Soll-Vergleich unterzieht.

Ebenso kann eine berührungslose Überwachung einer Temperatur des Rolllagers mittels einer Thermographie-Kamera oder eines Pyrometers erfolgen, wobei die ermittelte Temperatur einem Ist/Soll-Vergleich unterzogen wird. Es versteht sich, dass zwei oder mehrere der oben genannten Messverfahren miteinander kombiniert werden können.

Gemäß einer weiteren Weiterbildung kann die Prüfvorrichtung eine Teststation umfassen, welche dazu ausgebildet ist, ein Funktionselement des Transportelements, insbesondere eine Haltevorrichtung für Behälter zu testen. Neben dem Verschleiß der Lagerelemente kann auch eine Fehlfunktion von Funktionselementen des Transportelements, z. B. einer Haltevorrichtung für Behälter wie eines Greifelements oder einer Klammer, oder von Funktionselementen von Transportelementen mit Sonderfunktionen, z. B. zum Reinigen der Transportbahn oder einer Behälterbehandlungseinheit, zum Transport von Rüstteilen für eine Behälterbehandlungseinheit, oder dergleichen zu einer Störung der Produktion der Behälterbehandlungsanlage führen. Mittels einer geeigneten Teststation der Prüfvorrichtung kann die Funktionsfähigkeit des oder der entsprechenden Funktionselemente des Transportelements regelmäßig getestet werden, so dass fehlerhafte Funktionselemente von der Steuer- und/oder Regeleinheit der Transporteinrichtung zum Austausch des entsprechenden Funktions- bzw. Formatteils der Wartungsvorrichtung zugeführt werden können. Durch frühzeitige Erkennung von fehlerhaften Funktionselementen kommt es zu weniger Störungen und somit zu einer höheren Verfügbarkeit der Behälterbehandlungsanlage.

Gemäß einer Weiterbildung kann die Transporteinrichtung weiterhin einen energiegepufferten Steuer- und/oder Regelkreis und eine Vielzahl von entlang der Transportbahn angeordneten Sensoren zur Bestimmung einer Position des mindestens einen Transportelements entlang der Transportbahn als Teil des energiegepufferten Steuer- und/oder Regelkreis aufweisen, wobei der energiegepufferte Steuer- und/oder Regelkreis derart ausgebildet ist, dass er die Position des mindestens einen Transportelements bei ausgeschalteter Behälterbehandlungsanlage bestimmen kann.

Erfindungsgemäß umfasst der energiegepufferte Steuer- und/oder Regelkreis eine Vielzahl von entlang der Transportbahn angeordneten Sensoren, mittels derer eine Bestimmung der Positionen der Transportelemente entlang der Transportbahn erfolgen kann. Dazu kann der energiegepufferte Steuer- und/oder Regelkreis getrennt von den Wechselwirkungselementen der Transportbahn sowie einer zum Ansteuern der Wechselwirkungselemente verwendeten Steuer- und/oder Regeleinheit der Transporteinrichtung ausgebildet sein. Durch Reduzieren der zu puffernden Steuerungselemente auf diejenigen Elemente, welche zur Bestimmung und Weiterverarbeitung der Position der Transportelemente entlang der Transportbahn dienen, kann auch bei ausgeschalteter Behälterbehandlungsanlage, d. h. bei Unterbrechung der Stromversorgung der Behälterbehandlungsanlage, ein effizientes und fehlerfreies Bestimmen der Positionen der Transportelemente garantiert werden. Die bestimmten Positionen können dabei wie oben beschrieben zusammen mit den Zustandsparametern der Transportelemente in einer Speichereinrichtung gespeichert und beim Wiederanfahren der Transporteinrichtung ausgelesen werden (siehe unten).

Gemäß einer weiteren Weiterbildung kann der Steuer- und/oder Regelkreis weiterhin eine Speichereinrichtung zum Speichern der bestimmten Position umfassen. Die Speichereinrichtung kann dabei wie bereits zuvor beschrieben als nichtflüchtiges Speichermedium, z. B. in Form einer Festplatte, eines Flashdrives, einer Speicherkarte, eines optischen Speichermediums oder eines anderen im Stand der Technik bekannten nichtflüchtigen Speichermediums ausgebildet sein. Der energiegepufferte Steuer- und/oder Regelkreis kann hierbei, wie im Folgenden beschrieben, die Positionen der Transportelemente nach Abklingen einer Restbewegung nach Ausschalten der Behälterbehandlungsanlage, z. B. durch einen Stromausfall, zuverlässig bestimmen und zur späteren Verwendung, z. B. in einer Initialisierungsphase der Transporteinrichtung, in der Speichereinrichtung speichern.

Gemäß einer weiteren Weiterbildung kann der Steuer- und/oder Regelkreis durch eine unterbrechungsfreie Stromversorgung energiegepuffert werden. Dabei kann die unterbrechungsfreie Stromversorgung derart ausgestaltet sein, dass eine Stromversorgung des Steuer- und/oder Regelkreises für eine vorgegebene Mindestzeitdauer ab dem Ausschalten der Behälterbehandlungsanlage garantiert werden kann. Unterbrechungsfreie Stromversorgungen (USV) sind im Stand der Technik bekannt und können beispielsweise mittels eines Akkus, einer Batterie oder eines Kondensators realisiert werden. Der energiegepufferte Steuer- und/oder Regelkreis kann weiterhin als speicherprogrammierbare Steuerung ausgeführt sein.

In einer weiteren Weiterbildung können die Sensoren Magnetfeldsensoren sein. Insbesondere kann es sich bei den Magnetfeldsensoren um Hallsensoren oder Sensoren zur Messung des magnetischen Flusses auf der Basis eines der oben beschriebenen Effekte handeln.

Die vorliegende Erfindung stellt auch ein Verfahren zur Registrierung der Positionen von einzeln steuerbaren Transportelementen einer Transporteinrichtung zum Transport von Behältern in einer Behälterbehandlungsanlage entlang einer Transportbahn bei ausgeschalteter Behälterbehandlungsanlage, wobei die Transportelemente bewegbar an der Transportbahn angeordnet sind, zur Verfügung, welches die Schritte umfasst:
Puffern einer Energieversorgung eines Steuer- und/oder Regelkreises über eine vorgegebene Mindestzeit ab dem Zeitpunkt, zu dem die Behälterbehandlungsanlage ausgeschaltet wird, und
Bestimmen einer ersten Position eines Transportelements entlang der Transportbahn zu einem ersten Zeitpunkt mittels des energiegepufferten Steuer- und/oder Regelkreises.

Hierbei können dieselben Variationen und Weiterbildungen, die oben im Zusammenhang mit den einzeln steuerbaren Transportelementen, der Transportbahn und der Behälterbehandlungsanlage beschrieben wurden, auch auf das Verfahren zur Registrierung der Positionen angewendet werden. Insbesondere kann der Steuer- und/oder Regelkreis eine oder mehrere der oben beschriebenen Steuer- und/oder Regeleinheiten aufweisen.

Im Normalbetrieb einer Transporteinrichtung zum Transport von Behältern in einer Behälterbehandlungsanlage mittels einzeln steuerbarer Transportelemente steuert ein Steuer- und/oder Regelkreis die Transportelemente einzeln entlang der Transportbahn. Während des Normalbetriebs der Transporteinrichtung sind dabei im Allgemeinen die Positionen der einzeln steuerbaren Transportelemente dem Steuer- und/oder Regelkreis bekannt, indem sie z. B. als zeitabhängige Daten in einer Speichereinheit bzw. einer Steuer- und/oder Regeleinheit des Steuer- und/oder Regelkreises vorliegen. Beim Ausschalten einer Steuerspannung zum individuellen Steuern der Transportelemente verlieren jedoch die Transportelemente ihre Absolutposition, d. h. ihre Position kann nicht mehr vom Steuer- und/oder Regelkreis überwacht bzw. gespeichert werden, sodass die Transportelemente nicht weiterverfolgt werden können. Aufgrund der trägen Masse der Transportelemente bewegen sich diese jedoch üblicherweise auch nach Ausschalten der Steuerspannung weiter, sodass die Information über die endgültigen Positionen der Transportelemente selbst bei Speichern der Positionen der Transportelemente vor dem Ausschalten der Steuerspannung in einem nichtflüchtigen Speicher einer Speichereinheit verloren geht. Eine Produktverfolgung ist damit nicht möglich. Außerdem ist die Initialisierungsroutine beim Wiederanfahren der Behälterbehandlungsanlage sehr fehleranfällig, da Transportelemente unter Umständen nicht erkannt werden können.

Ein solches Ausschalten der Steuerspannung kann z. B. beim Abfahren der Behälterbehandlungsanlage bzw. der Transporteinrichtung und insbesondere bei einem Stromausfall auftreten. Das erfindungsgemäße Verfahren stellt nun ein Puffern einer Energieversorgung des Steuer- und/Regelkreises über eine vorgegebene Mindestzeit ab dem Zeitpunkt, zu dem die Behälterbehandlungsanlage ausgeschaltet wird, zur Verfügung. Dabei kann der gepufferte Steuer- und/oder Regelkreis als selbstständiger Teil des gesamten Steuer- und/oder Regelkreises ausgeführt sein, welcher beispielsweise lediglich die Lokalisierungseinheiten bzw. Sensoren der Transportbahn und eine zentrale Steuer- und/oder Regeleinheit mit einer Speichereinheit zum Speichern der Positionen und optional der Zustandsparameter der Transportelemente sowie eventuell die Steuerelektronik zum Ansteuern der Wechselwirkungselemente der Transportbahn umfassen kann. Somit ist zum Puffern der Energieversorgung des Steuer- und/oder Regelkreises eine sehr viel geringere Leistung erforderlich als zum Betrieb der gesamten Transporteinrichtung, zu dem auch z. B. die Stromversorgung der Wechselwirkungselemente der Transportbahn gehört. Das Puffern der Energieversorgung des Steuer- und/oder Regelkreises kann daher über eine geeignet dimensionierte Notstromversorgung, d. h. eine unterbrechungsfreie Stromversorgung, z. B. in Form eines Akkus, einer Batterie oder eines Kondensators, erfolgen, wobei die Notstromversorgung derart ausgestaltet ist, dass sie eine Energieversorgung des Steuer- und/oder Regelkreises über die vorgegebene Mindestzeit garantiert.

Die unterbrechungsfreie Stromversorgung kann dabei derart ausgeführt sein, dass sie bei Wegfall der Stromversorgung der Transporteinrichtung selbstständig und automatisch zugeschaltet wird. In diesem Fall versorgt die Notstromversorgung den Steuer- und/oder Regelkreis über die vorgegebene Mindestzeit ab dem Zeitpunkt, zu dem die Behälterbehandlungsanlage ausgeschaltet wird. Hierbei wird vorausgesetzt, dass ein Ausschalten der Behälterbehandlungsanlage ein Unterbrechen der Stromversorgung der Transporteinrichtung umfasst. Alternativ kann das Puffern der Energieversorgung durch die Notstromversorgung jedoch auch zeitverzögert einsetzen, wobei die zeitliche Verzögerung derart gewählt werden kann, dass die Transportelemente innerhalb der Zeitverzögerung vollständig zur Ruhe kommen.

Mit Hilfe des gepufferten Steuer- und/oder Regelkreises wird nun gemäß der Erfindung eine erste Position eines Transportelements entlang der Transportbahn zu einem ersten Zeitpunkt bestimmt. Dabei kann der erste Zeitpunkt so gewählt werden, dass eine Restbewegung der Transportelemente beim Ausschalten der Behälterbehandlungsanlage bis zum ersten Zeitpunkt im Wesentlichen, z. B. zu 95 % abgeklungen ist. Eine typische Verzögerung des ersten Zeitpunkts ab dem Zeitpunkt, zu dem die Behälterbehandlungsanlage ausgeschaltet wird, kann z. B. 0,5 bis 10 Sekunden betragen. Das Bestimmen der ersten Position mittels des energiegepufferten Steuer- und/oder Regelkreises geschieht dabei automatisch.

Gemäß einer Weiterbildung kann das Bestimmen der ersten Position anhand einer Vielzahl von entlang der Transportbahn angeordneten Sensoren, insbesondere Magnetfeldsensoren erfolgen, welche Teil des energiegepufferten Steuer- und/oder Regelkreises sind. Dabei können die Sensoren, insbesondere die Magnetfeldsensoren wie oben beschrieben ausgeführt sein. In einer speziellen Weiterbildung kann eine Steuer- und/oder Regeleinheit des energiegepufferten Steuer- und/oder Regelkreises die Vielzahl der entlang der Transportbahn angeordneten Sensoren sukzessive nacheinander abfragen, um für jedes entlang der Transportbahn angeordnete Transportelement eine erste Position zu bestimmen.

Gemäß einer weiteren Weiterbildung kann das Verfahren weiterhin die Schritte umfassen:
Bestimmen einer zweiten Position des Transportelements entlang der Transportbahn zu einem zweiten Zeitpunkt, welcher später als der erste Zeitpunkt ist, mittels des energiegepufferten Steuer- und/oder Regelkreises,
Vergleichen der zweiten mit der ersten Position und
Speichern der zweiten Position in einer Speichereinheit des Steuer- und/oder Regelkreises, wenn die zweite Position von der ersten Position um weniger als eine vorgegebene Distanz abweicht.

Dabei kann die zweite Position des Transportelements wie schon die erste Position anhand der Vielzahl von entlang der Transportbahn angeordneten Sensoren automatisch bestimmt werden. Der zweite Zeitpunkt kann um eine vorgegebene Zeitspanne gegenüber dem ersten Zeitpunkt verzögert sein. Diese Zeitspanne kann derart gewählt werden, dass eine Restbewegung des Transportelements, z. B. aufgrund der Trägheit des Transportelements, mit hoher Wahrscheinlichkeit, z. B. mit 95 %iger Wahrscheinlichkeit, zum zweiten Zeitpunkt abgeklungen sein wird.

Wenn die zweite Position von der ersten Position um weniger als eine vorgegebene Distanz abweicht, so wird erfindungsgemäß die zweite Position in einer Speichereinheit des Steuer- und/oder Regelkreises gespeichert. Die vorgegebene Distanz kann dabei insbesondere kleiner als der Abstand benachbarter Wechselwirkungselemente der Transportbahn sein. Die Speichereinheit, in welcher die zweite Position gespeichert wird, kann insbesondere in Form eines nichtflüchtigen Speichermediums, z. B. einer Festplatte, eines optischen Speichermediums, eines Flashspeichers oder ähnlicher im Stand der Technik bekannter nichtflüchtiger Speichermedien ausgeführt sein.

Sollte die zweite Position von der ersten Position um die vorgegebene Distanz oder mehr abweichen, so kann eine weitere Position des Transportelements entlang der Transportbahn zu einem weiteren Zeitpunkt, welcher später als der zweite Zeitpunkt ist, mittels des energiegepufferten Steuer- und/oder Regelkreises bestimmt werden und der oben beschriebene Schritt des Vergleichens und Speicherns wiederholt werden. Es versteht sich von selbst, dass die beschriebenen Verfahrensschritte wiederholt angewendet werden können. Dabei ist insbesondere ein Wiederholen der Schritte mit einem vorgegebenen festen Zeitintervall möglich. Die Anzahl der möglichen Wiederholungen ergibt sich hierbei aus der vorgegebenen Mindestzeit und dem vorgegebenen Zeitintervall.

Das erfindungsgemäße Verfahren ermöglicht somit selbst bei spontanem Zusammenbruch der Energieversorgung der Transporteinrichtung durch den energiegepufferten Steuer- und/oder Regelkreis das Registrieren der endgültigen Positionen der Transportelemente entlang der Transportbahn in einem nichtflüchtigen Speichermedium. Somit wird eine lückenlose Produktverfolgung ermöglicht. Beim Wiederanfahren der Behälterbehandlungsanlage können die so gespeicherten Positionen der Transportelemente aus der Speichereinheit des Steuer- und/oder Regelkreises gelesen werden, um von einer Steuer- und/oder Regeleinheit zur Initialisierung der Transporteinrichtung verwendet zu werden. Somit wird eine Initialisierung der Transporteinrichtung nach Zusammenbruch der Stromversorgung erheblich vereinfacht und beschleunigt. Insbesondere können Produkte, welche sich beim Zusammenbruch der Stromversorgung noch im Transport befanden, bei der Initialisierung berücksichtigt werden, sodass Ausschuss bzw. unnötiger Stillstand vermieden werden können.

Die oben genannte Aufgabe wird auch durch ein Verfahren zur Wartung einer Vielzahl von einzeln steuerbaren Transportelementen zum Transport von Behältern in einer Behälterbehandlungsanlage entlang einer Transportbahn, wobei die Vielzahl von Transportelementen bewegbar an der Transportbahn angeordnet sind, gelöst, wobei das Verfahren die Schritte umfasst:
Bestimmen mindestens eines Zustandsparameters eines Transportelements aus der Vielzahl von Transportelementen,
Vergleichen des bestimmten mindestens einen Zustandsparameters mit einem vorbestimmten Sollzustand des Transportelements,
Zuführen des Transportelements zu einer an der Transportbahn angeordneten Wartungsvorrichtung durch mittels einer Steuer- und/oder Regeleinheit gesteuertes Bewegen des Transportelements entlang der Transportbahn bei Abweichen des bestimmten mindestens einen Zustandsparameters von dem vorbestimmten Sollzustand, und
Durchführen mindestens eines Wartungsprozesses an dem Transportelement durch die Wartungsvorrichtung.

Hierbei können dieselben Variationen und Weiterbildungen, die oben im Zusammenhang mit der erfindungsgemäßen Transporteinrichtung beschrieben wurden, auch auf das Verfahren zur Wartung angewendet werden. Insbesondere kann der mindestens eine Zustandsparameter des Transportelements die oben beschriebenen Zustandsparameter umfassen und mittels einer der oben beschriebenen Prüfvorrichtungen bestimmt werden. Das Bestimmen des mindestens einen Zustandsparameters kann dabei bei jedem Passieren des Transportelements an der Prüfvorrichtung geschehen oder durch die Steuer- und/oder Regeleinheit der Transporteinrichtung in regelmäßigen oder vorgegebenen Zeitabständen ausgelöst werden. Der bestimmte mindestens eine Zustandsparameter kann dann mit einem vorbestimmten Sollzustand des Transportelements durch die Steuer- und/oder Regeleinheit, insbesondere durch eine Prozesseinheit der Steuer- und/oder Regeleinheit, verglichen werden, wobei die Steuer- und/oder Regeleinheit das Transportelement bei Abweichen des mindestens einen Zustandsparameters von dem vorbestimmten Sollzustand um mindestens eine vorgegebene Differenz zur Wartung zu einer an der Transportbahn angeordneten Wartungsvorrichtung führen kann. In der Wartungsvorrichtung kann dann in Abhängigkeit von dem Ergebnis des Vergleichs durch die Steuer- und/oder Regeleinheit gesteuert ein entsprechender Wartungsprozess an dem Transportelement durchgeführt werden. Insbesondere kann das Transportelement wie oben beschrieben gereinigt, entkeimt, mit einem Schmiermittel beaufschlagt, repariert oder umgebaut werden und/oder Verschleißteile und/oder Formatteile des Transportelements können in der Wartungsvorrichtung ausgetauscht werden.

Gemäß einem Aspekt der Erfindung umfasst das Bestimmen des mindestens einen Zustandsparameters des Transportelements eine Verschleißprüfung eines Lagerelements des Transportelements und/oder eine Funktionsprüfung eines Funktionselements, insbesondere einer Haltevorrichtung für Behälter, des Transportelements, wobei der mindestens eine Zustandsparameter automatisch von einer Prüfvorrichtung, vorzugsweise in regelmäßigen Zeitabständen, bestimmt wird. Die Zeitabstände können hierbei vom Bedienungspersonal vorgegebenen werden oder in Abhängigkeit von dem verwendeten Lagerelement, Funktionselement und/oder zu transportierenden Behälter bestimmt werden. Eine Verschleißprüfung bzw. Funktionsprüfung kann dabei wie oben beschrieben erfolgen. Die oben beschriebenen Verfahrensschritte können insbesondere automatisch, z. B. mittels der Steuer- und/oder Regeleinheit der Transporteinrichtung, erfolgen. Dabei kann das Verfahren von der Steuer- und/oder Regeleinheit zu vorgegebenen Zeitpunkten, in vorgegebenen zeitlichen Abständen und/oder in Abhängigkeit von vorgegebenen Prozessparametern, wie z. B. der Standzeit einer Behandlungsanlage, einem Produktwechsel in der Anlage, fehlerhafter Verarbeitung von Behältern in einer Behandlungseinheit bzw. fehlerhaftem Verhalten von Transportelementen, usw., ohne Eingreifen des Bedienungspersonals automatisch durchgeführt werden oder auch in Reaktion auf eine Anforderung durch das Bedienungspersonal erfolgen.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.
- Fig. 1: stellt eine beispielhafte Ausführung des mindestens einen Transportelements und der Wechselwirkungselemente der Transportbahn dar.
- Fig. 2: stellt eine Prinzipskizze für die Anordnung einer Wartungsvorrichtung an einer Nebenstrecke gemäß der vorliegenden Erfindung dar.
- Fig. 3: stellt eine Prinzipskizze für eine Wechselvorrichtung für Verschleißteile mit einem Montageroboter gemäß der vorliegenden Erfindung dar.
- Fig. 4: stellt eine Prinzipskizze für eine Wartungsvorrichtung mit einem Magazin für Transportelemente gemäß der vorliegenden Erfindung dar.
- Fig. 5: stellt eine Prinzipskizze für eine Prüfvorrichtung mit zwei in die Transportbahn integrierten Sensoren gemäß der vorliegenden Erfindung dar.
- Fig. 6: stellt eine Prinzipskizze für einen energiegepufferten Steuer- und/oder Regelkreis einer Transporteinrichtung für individuell steuerbarer Transportelemente gemäß der vorliegenden Erfindung dar.

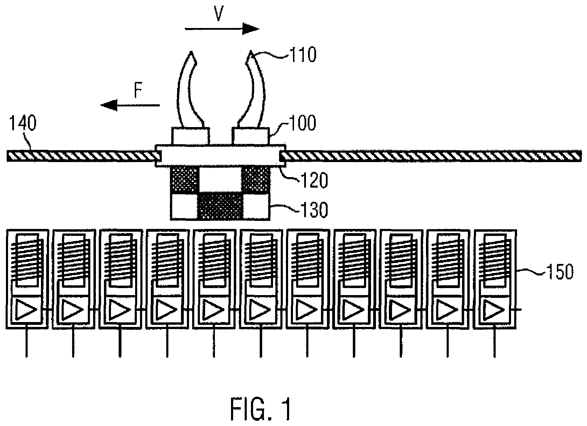

In Fig. 1 ist exemplarisch ein Transportelement 100 dargestellt. Die vorliegende Erfindung beschränkt sich jedoch nicht auf die hier dargestellte spezielle Ausführung des Transportelements, sondern ist auf jede Art von Transportelementen anwendbar, solange diese einzeln steuerbar entlang einer Transportbahn geleitet werden können, insbesondere wenn dies mittels einer magnetischen Wechselwirkung mit der Transportbahn geschieht. Das hier dargestellte Transportelement 100 kann entlang der Transportbahn mittels einer Führungsschiene 140 geleitet werden. Dabei ist das Transportelement in dieser speziellen Ausführung durch ein Gleitlager 120 an der Führungsschiene 140 gelagert. Die Figur zeigt weiterhin ein Greifelement 110, mittels dessen das Transportelement die Behälter aufnehmen kann.

Der Antrieb des hier dargestellten passiven Transportelements geschieht durch magnetische Wechselwirkung zwischen dem Reaktionselement 130 des Transportelements und einer Vielzahl elektrischer Wicklungen 150 entlang der Transportbahn. Dabei können die elektrischen Wicklungen 150 individuell angesteuert und als Elektromagnete einzeln umgepolt werden. Durch Wechselwirkung der Magnetfelder der Elektromagnete mit dem hier dargestellten Permanentmagneten des Transportelements erfährt das Transportelement eine Kraftwirkung, welche bei geeigneter Steuerung der Elektromagnete 150 zu einer Beschleunigung, Abbremsung oder konstanten Bewegung des Transportelements entlang der Führungsschiene 140 führt. Das hier dargestellte Reaktionselement 130 des Transportelements besteht aus drei alternierend und senkrecht zur Führungsschiene angeordneten Permanentmagneten, wobei die Breite des mittleren Permanentmagneten in etwa dem Abstand zweier benachbarter elektrischer Wicklungen der Transportbahn entspricht und die Breite der äußeren Permanentmagneten etwa jeweils der Hälfte des Abstands der benachbarten elektrischen Wicklungen entspricht. Bei alternierender Polung benachbarter Elektromagnete in der Transportbahn kann somit eine maximale Kraft auf das Reaktionselement entlang der Führungsschiene ausgeübt werden. Durch individuelles Ansteuern der Elektromagnete 150 kann das Transportelement 100 mit der von einer Steuer- und/oder Regeleinheit der Transporteinrichtung vorgegebenen Geschwindigkeit V entlang der Führungsschiene 140 bewegt werden. Dabei wirkt aufgrund der Reibung des hier dargestellten Gleitlagers 120 mit der Führungsschiene 140 jedem Transportelement eine bestimmte Kraft F entgegen, welche direkt mit der Qualität der Lagerung (Reibungskoeffizient) zusammenhängt. Die zur Überwindung dieser Reibungskraft F benötigte Stromstärke in der elektrischen Wicklung 150 kann daher zur Bestimmung des Reibungskoeffizienten und damit der Qualität der Lagerung mittels einer entlang der Transportbahn angeordneten Prüfvorrichtung verwendet werden. Es versteht sich, dass es sich bei den dargestellten senkrecht zur Führungsschiene angeordneten Magneten des Transportelements auch um Elektromagnete handeln kann.

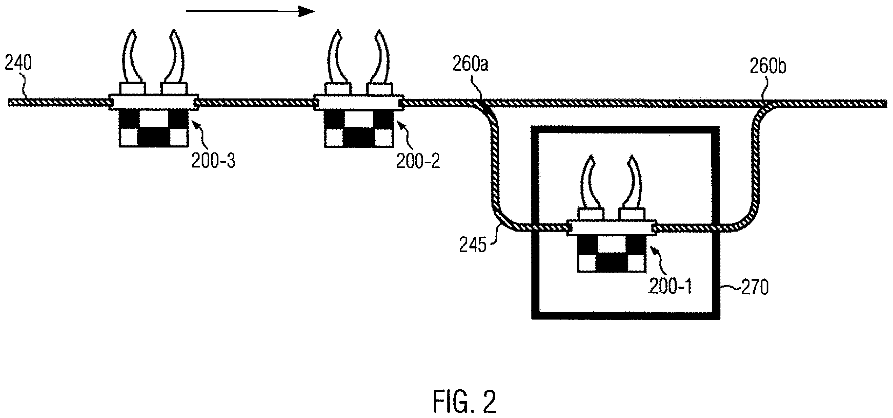

In Fig. 2 ist eine Prinzipskizze für die Anordnung einer Wartungsvorrichtung an einer Nebenstrecke gemäß der vorliegenden Erfindung dargestellt. Die exemplarisch dargestellte Wartungsvorrichtung 270 kann wie oben beschrieben eine Vielzahl von Vorrichtungen zum Reinigen, Sterilisieren, Schmieren, Reparieren oder Umbauen der Transportelemente 200-1 bis 200-3 umfassen. Dabei kann die Wartungsvorrichtung 270 anders als hier dargestellt auch mehr als ein Transportelement gleichzeitig warten. In der dargestellten speziellen Ausführungsform bewegt sich der Strom der Transportelemente 200-2 und 200-3 entlang einer Hauptstrecke 240 der Transportbahn, wobei die Hauptstrecke insbesondere Teil einer Rückführstrecke der Transporteinrichtung sein kann. Vorteilhafterweise sind somit die Transportelemente 200-1 bis 200-3 im Bereich der Wartungsvorrichtung nicht mit Behältern beladen.

In der hier dargestellten speziellen Ausführungsform ist die Wartungsvorrichtung 270 an einer Nebenstrecke 245 zu der Hauptstrecke 240 angeordnet. Über eine erste Weiche 260a werden, gesteuert durch eine Steuer- und/oder Regeleinheit der Transporteinrichtung, einzelne Transportelemente 200-1 in Abhängigkeit von mindestens einem Zustandsparameter der Transportelemente der Wartungsvorrichtung zugeführt. In der hier dargestellten Ausführungsform geschieht das Führen der Transportelemente entlang der Nebenstrecke vorzugsweise über dieselbe Wechselwirkung, mit welcher die Transportelemente auch entlang der Hauptstrecke geführt werden. Nach Durchführen eines oder mehrerer Wartungsprozesse an dem Transportelement 200-1 wird selbiges über eine zweite Weiche 260b wieder in den Strom der Transportelemente entlang der Hauptstrecke 240 eingeführt. Die hier dargestellte Nebenstrecke wird somit nach dem First In - First Out, FIFO, Prinzip betrieben.

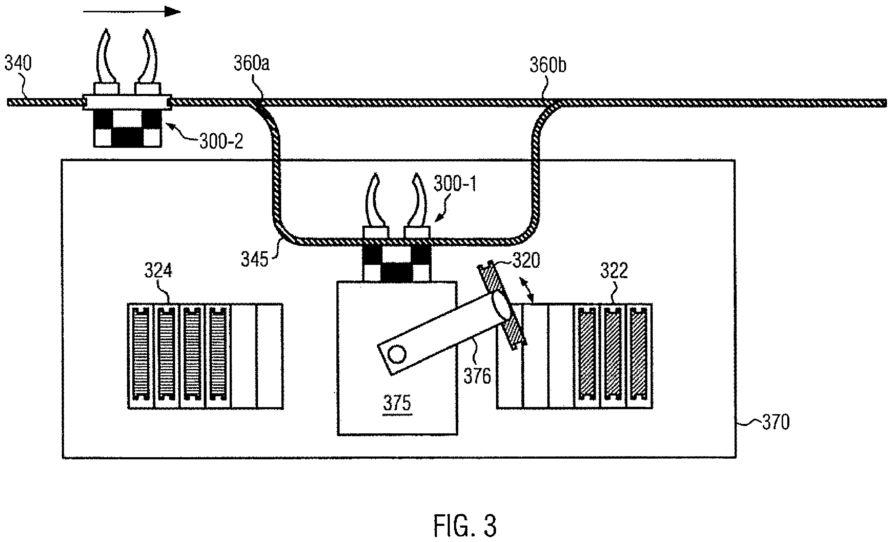

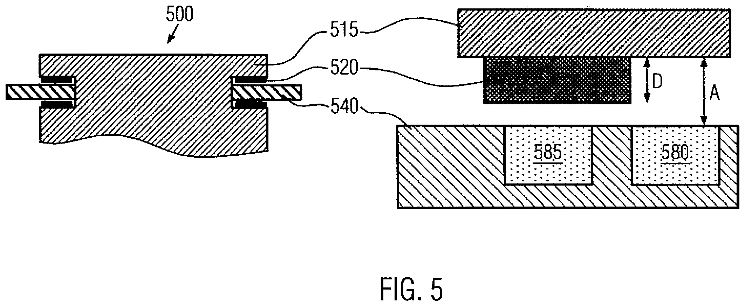

In Fig. 3 ist skizzenhaft eine spezielle Ausführung der parallel angeordneten Wartungsvorrichtung mit einer Wechselvorrichtung für Verschleißteile dargestellt. Der Strom der Transportelemente 300-2 bewegt sich wie in Fig. 2 entlang der Hauptstrecke 340, von welcher Transportelemente 300-1 bei Bedarf, insbesondere bei Verschleiß des hier dargestellten Gleitlagers, über eine erste Weiche 360a der an einer Nebenstrecke 345 angeordneten Wartungsvorrichtung 370 zugeführt werden können. In der hier dargestellten speziellen Ausführung umfasst die Wartungsvorrichtung 370 eine Wechselvorrichtung für Verschleißteile, insbesondere für die hier dargestellten Gleitlager. Ein Montageroboter 375 entnimmt ein verschlissenes Gleitlager des zu wartenden Transportelements 300-1 und legt es in einem Magazin 324 für verschlissene Gleitlager ab. Anschließend entnimmt der Montageroboter 375 mittels eines drehbar gelagerten Montagearms 376 ein neues Gleitlager 320 aus einem Magazin 322 für neue Gleitlager und setzt es automatisch in das zu wartende Transportelement 300-1 ein. Die Magazine 322 und 324 können hierbei als modulare Einheiten ausgebildet sein, welche bei Bedarf automatisch oder manuell durch das Bedienungspersonal an die Wartungsvorrichtung gekoppelt bzw. von ihr entkoppelt werden können. Nach Austausch des Gleitlagers wird das Transportelement 300-1 automatisch von der Steuer- und/oder Regeleinheit über eine zweite Weiche 360b zurück in den Strom der Transportelemente entlang der Hauptstrecke 340 eingeleitet. Das Ausleiten und Warten einzelner Transportelemente kann dabei gesteuert von der Steuer- und/oder Regeleinheit der Transporteinrichtung in Abhängigkeit von einem gemessenen Reibungskoeffizienten bzw. Abrieb der Gleitlager der Transportelemente erfolgen (siehe Fig. 5).

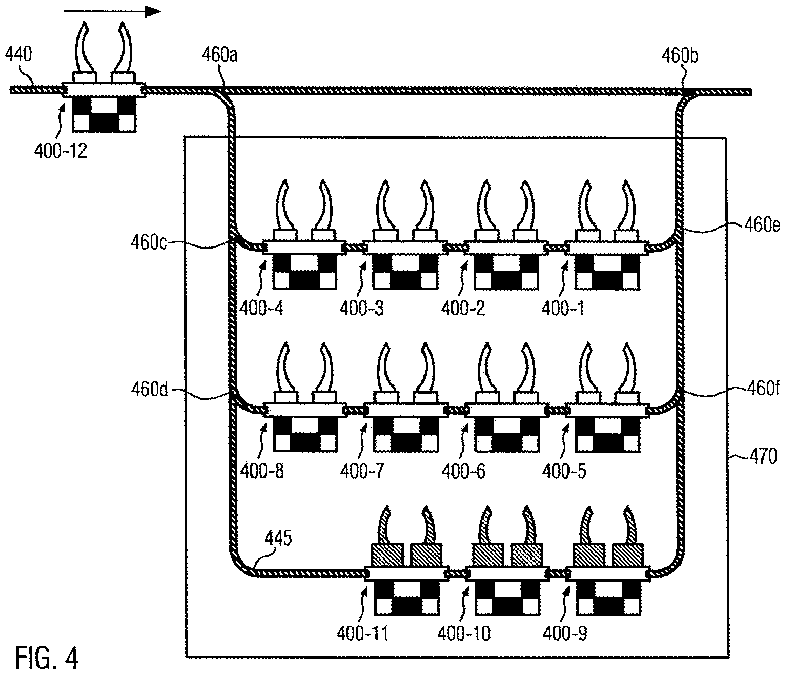

In Fig. 4 ist skizzenhaft eine alternative Ausführungsform einer Wartungsvorrichtung für Transportelemente dargestellt, welche ein Magazin für Transportelemente aufweist. Wie bereits mehrfach beschrieben bewegt sich der Strom von Transportelementen 400-12 entlang der Hauptstrecke 440 der Transportbahn, wobei einzelne Transportelemente über eine erste Weiche 460a und eine Nebenstrecke 445 der parallel zur Hauptstrecke angeordneten Wartungsvorrichtung 470 zugeführt werden können. In der hier dargestellten speziellen Ausführungsform weist die Wartungsvorrichtung 470 mehrere parallel angeordnete Zweige zur Lagerung ganzer Transportelemente 400-1 bis 400-11 auf. Dabei können verschiedene Zweige denselben Typ von Transportelementen 400-1 bis 400-8 oder einen anderen Typ von Transportelementen 400-9 bis 400-11, z. B. mit einem alternativen Greifelement, vorrätig halten. Ein von der Hauptstrecke ausgeschleustes Transportelement kann über Weichen 460c bis 460f der Wartungsvorrichtung 470 bei Bedarf durch ein in dem Magazin vorrätig gehaltenes Transportelement ersetzt werden, welches anschließend über die zweite Weiche 460b in den Strom der Transportelemente entlang der Hauptstrecke eingeführt wird. Bei Ersetzen des ausgeleiteten Transportelements mit einem Transportelement 400-9 bis 400-11 mit alternativen Formatteilen, z. B. Greifelementen, kann, gesteuert von der Steuer- und/oder Regeleinheit der Transporteinrichtung, ein rascher Produktwechsel vorgenommen werden. Insbesondere kann die Gesamtheit der in der Transporteinrichtjung umlaufenden Transportelemente mittels eines als Modul an die Wartungsvorrichtung koppelbaren Magazins rasch durch Transportelemente mit anderen, für ein neues Produkt angepassten Formatteilen ersetzt werden. Alternativ erlaubt ein solches Magazin für Transportelemente jedoch auch den schnellen Ersatz eines fehlerhaften Transportelements mit einem neuen Transportelement, wobei das fehlerhafte Transportelement anschließend aus dem Magazin entnommen und manuell oder automatisch repariert werden kann.

Fig. 5 stellt exemplarisch eine Prüfvorrichtung zum Bestimmen der Dicke bzw. des Abriebs eines Gleitlagers der Transportelemente gemäß der vorliegenden Erfindung dar. Das hier skizzenhaft dargestellte Transportelement 500 verfügt über mehrere an dem Gehäuse 515 des Transportelements angebrachte Gleitlager 520, mit welchen das Transportelement an der Führungsschiene 540 gelagert ist. Exemplarisch ist in Fig. 5 eines der dargestellten Gleitlager als bereits teilweise verschlissen dargestellt, welches sich in einer reduzierten Dicke D des Gleitlagers ausdrückt.

Die hier exemplarisch dargestellte Prüfvorrichtung weist einen Sensor 580 zur Messung eines Abstands A des Gehäuses 515 von der Führungsschiene 540 sowie einen weiteren Sensor 585 zur Bestimmung der Dicke D eines Gleitlagers 520 auf. Alternativ können die dargestellten Sensoren jedoch auch als Teil des Transportelements und/oder an anderen Stellen der Transportbahn angeordnet sein. Die Messung des Abstands A mittels des Sensors 580 kann beispielsweise durch Lasertriangulation oder mittels eines Wirbelstromsensors erfolgen. Bei letzterem können von dem Sensor 580 über magnetische Wechselfelder Wirbelströme im Gehäuse 515 des Transportelements induziert werden, welche gemäß der Lenzschen Regel dämpfend auf die durch den Sensor erzeugten Wechselfelder wirken. Die Dämpfung kann über Messung der induzierten Ströme bestimmt werden und bei Kenntnis des Materials des Gehäuses 515 zur Bestimmung des Abstands A verwendet werden. Aus dem Abstand A kann anschließend, im Falle, dass das Gleitlager an der Führungsschiene anliegt (anders als hier dargestellt), direkt auf die Dicke des Gleitlagers geschlossen werden. Alternativ kann über einen Sensor 585 auch unmittelbar die Dicke des Gleitlagers bestimmt werden, indem z. B. über Lasertriangulation die Dicke der hier dargestellten Lücke zwischen der Führungsschiene und dem Gleitlager oder mittels eines optischen Systems mit Bildverarbeitung der Abrieb eines zwei- oder mehrfarbigen Gleitlagers bestimmt wird. Eine Reihe alternativer Ausführungsformen der Sensoren 580 bzw. 585 zur Bestimmung des Abriebs eines Gleitlagers sind denkbar. Anhand der hier dargestellten Sensoren 580 bzw. 585 kann von der Prüfvorrichtung eine Dicke des oder der Gleitlager automatisch beim Passieren jedes Transportelements bestimmt werden. Weicht die bestimmte Dicke des Gleitlagers als Zustandsparameter des Transportelements von einem vorgegebenen Sollzustand des Gleitlagers ab, so kann die Steuer- und/oder Regeleinheit der Transporteinrichtung das entsprechende Transportelement zur automatischen Wartung, z. B. zum Austausch des verschlissenen Gleitlagers, einer stromabwärts von der Prüfvorrichtung angeordneten Wartungsvorrichtung zuführen. Durch die frühzeitige Erkennung von fehlerhaften Transportelementen, insbesondere von verschlissenen Lagerelementen, kommt es zu weniger Störungen und somit zu einer höheren Verfügbarkeit der Behälterbehandlungsanlage. Zudem kann ein erhöhter Energieverbrauch der Wechselwirkungselemente der Transportbahn aufgrund eines durch Verschleiß erhöhten Reibungskoeffizienten der Gleitlager vermieden werden. Insgesamt lässt sich somit trotz der hohen Anzahl der typischerweise in einer Behälterbehandlungsanlage umlaufenden Transportelemente ein sicherer Betrieb der Anlage ohne großen Bedienaufwand gewährleisten.

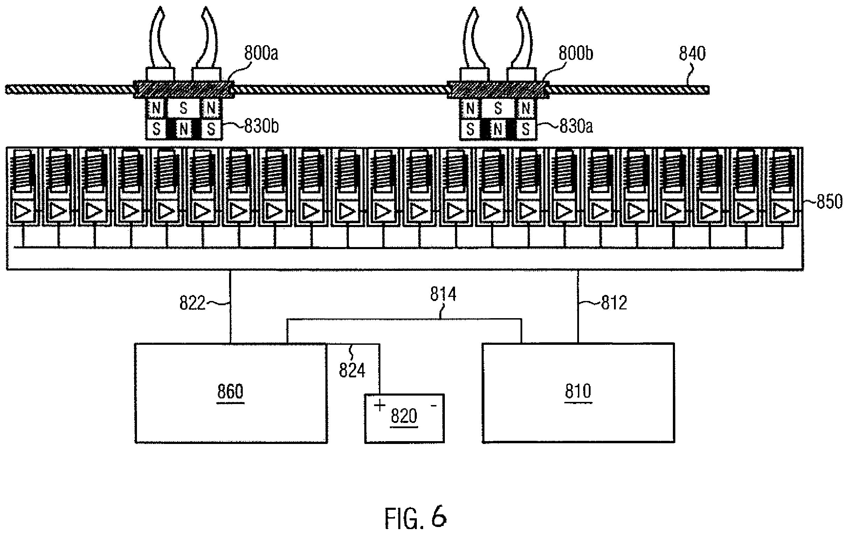

Fig. 6 schließlich stellt eine Prinzipskizze für eine Transporteinrichtung zum Transport von Behältern in einer Behälterbehandlungsanlage mittels einzeln steuerbarer Transportelemente mit einem energiegepufferten Steuer- und/oder Regelkreis gemäß der vorliegenden Erfindung dar. Die exemplarische, nicht limitierende Darstellung zeigt beispielhaft zwei Transportelemente 800a und 800b, welche durch magnetische Wechselwirkung ihrer Reaktionselemente 830a bzw. 830b mit den Wechselwirkungselementen 850 der Transportbahn entlang der Führungsschiene 840 bewegt werden können. Im Betriebszustand der Transporteinrichtung versorgt dazu eine Stromversorgung 810 die Wechselwirkungselemente 850 über eine Versorgungsleitung 812 mit Energie. Zusätzlich versorgt die Stromversorgung 810 über eine weitere Leitung 814 auch eine Steuer- und/oder Regeleinheit 860 eines Steuer- und/oder Regelkreises mit Energie. Die Steuer- und/oder Regeleinheit 860 steuert und/oder regelt die Bewegung der Transportelemente 800a und 800b durch individuelles Ansteuern der Wechselwirkungselemente 850 mittels einer Steuerleitung 822. Dabei wird im Allgemeinen zum Betrieb der Steuerelektronik deutlich weniger Leistung benötigt als beispielsweise zur Versorgung der elektrischen Wicklungen der Wechselwirkungselemente 850 mit Strom.

Aus diesem Grund ist erfindungsgemäß in dem dargestellten Beispiel die Steuer- und/oder Regeleinheit 860 als Teil eines getrennt von dem Versorgungskreis der Wechselwirkungselemente ausgebildeten, energiegepufferten Steuer- und/oder Regelkreises ausgebildet. Zu diesem Steuer- und/oder Regelkreis können neben der Steuer- und/oder Regeleinheit 860 und der Steuerleitung 822 sowie der Steuerelektronik für das Ansteuern der Wechselwirkungselemente 850 insbesondere entlang der Transportbahn angeordnete Sensoren zur Bestimmung der Position der Transportelemente gehören. Dabei übernimmt eine Notstromversorgung 820 in Form einer Batterie, eines Akkus, oder eines Kondensators im Falle einer Unterbrechung der Stromversorgung 810, z. B. durch Ausschalten der Behälterbehandlungsanlage oder durch Stromausfall, über eine separate Versorgungsleitung 824 die Pufferung des energiegepufferten Steuer- und/oder Regelkreises über eine vorgegebene Mindestzeitdauer. Während dieser Mindestzeitdauer klingt insbesondere eine Restbewegung der Transportelemente 800a und 800b entlang der Transportbahn aufgrund von Induktivitäten der elektrischen Wicklungen 850 der Transportbahn und/oder der Trägheit der Transportelemente ab, sodass die Steuer- und/oder Regeleinheit 860 mittels der entlang der Transportbahn angeordneten Sensoren die endgültige Position der nunmehr ruhenden Transportelemente bestimmen kann. Insbesondere kann die speicherprogrammierbare Steuereinheit 860 über eine Speichereinheit (hier nicht dargestellt) verfügen, in welcher die endgültigen Positionen und optional die Zustandsparameter der Transportelemente gespeichert werden können, um bei einer nachfolgenden Initialisierungsroutine der Transporteinrichtung ausgelesen zu werden. Durch Speichern der endgültigen Positionen der Transportelemente bei Zusammenbruch der Stromversorgung wird eine lückenlose Produktverfolgung ermöglicht. Zudem wird eine nachfolgende Initialisierung erheblicht vereinfacht und beschleunigt.

## Patentansprüche

1. Transporteinrichtung zum Transport von Behältern in einer Behälterbehandlungsanlage mit
einer Transportbahn,
mindestens einem Transportelement (100; 200-1 - 200-3; 300-1, 300-2; 400-1 - 400-12; 800a, 800b) zum Transportieren eines oder mehrerer Behälter, das bewegbar an der Transportbahn angeordnet ist,
einer Wartungsvorrichtung (270; 370; 470) für das Transportelement, welche mit der Transportbahn verbunden ist,
einer Steuer- und/oder Regeleinheit (860), und
eine Prüfvorrichtung,
wobei die Transportbahn und das Transportelement derart ausgestaltet sind, dass das Transportelement mittels der Steuer- und/oder Regeleinheit (860) einzeln steuerbar entlang der Transportbahn geführt werden kann,
wobei die Steuer- und/oder Regeleinheit (860) dazu ausgebildet ist, das Transportelement in Abhängigkeit von mindestens einem Zustandsparameter des Transportelements der Wartungsvorrichtung (270; 370; 470) zuzuführen,
wobei die Prüfvorrichtung dazu ausgebildet ist, den mindestens einen Zustandsparameter des Transportelements zu bestimmen, und
wobei das Transportelement (100; 200-1 - 200-3; 300-1, 300-2; 400-1 - 400-12; 800a, 800b) zumindest teilweise mechanisch an der Transportbahn gelagert ist,
**dadurch gekennzeichnet, dass**
der mindestens eine Zustandsparameter einen Verschleißgrad eines Lagerelements (520) des Transportelements umfasst,
wobei die Prüfvorrichtung einen Teil der Transportbahn, welcher eine Vielzahl von Wechselwirkungselementen (150) und eine Vielzahl von entlang der Transportbahn angeordneten Sensoren, insbesondere Magnetfeldsensoren, zur Bestimmung einer Position des Transportelements entlang der Transportbahn aufweist, und eine Messvorrichtung umfasst, und
wobei die Messvorrichtung dazu ausgebildet ist, mittels der Wechselwirkungselemente (150) und/oder Sensoren einen Reibungskoeffizienten für eine Bewegung des Transportelements entlang der Transportbahn zu bestimmen.

2. Transporteinrichtung zum Transport von Behältern in einer Behälterbehandlungsanlage mit
einer Transportbahn,
mindestens einem Transportelement (100; 200-1 - 200-3; 300-1, 300-2; 400-1 - 400-12; 800a, 800b) zum Transportieren eines oder mehrerer Behälter, das bewegbar an der Transportbahn angeordnet ist,
einer Wartungsvorrichtung (270; 370; 470) für das Transportelement, welche mit der Transportbahn verbunden ist,
einer Steuer- und/oder Regeleinheit (860), und
eine Prüfvorrichtung,
wobei die Transportbahn und das Transportelement derart ausgestaltet sind, dass das Transportelement mittels der Steuer- und/oder Regeleinheit (860) einzeln steuerbar entlang der Transportbahn geführt werden kann,
wobei die Steuer- und/oder Regeleinheit (860) dazu ausgebildet ist, das Transportelement in Abhängigkeit von mindestens einem Zustandsparameter des Transportelements der Wartungsvorrichtung (270; 370; 470) zuzuführen, und
wobei die Prüfvorrichtung dazu ausgebildet ist, den mindestens einen Zustandsparameter des Transportelements zu bestimmen,
**dadurch gekennzeichnet, dass**
das Transportelement (100; 200-1 - 200-3; 300-1, 300-2; 400-1 - 400-12; 800a, 800b) zumindest teilweise mittels mindestens eines Gleitlagers (120; 520) an einer Führungsschiene (540) der Transportbahn gelagert ist,
wobei der mindestens eine Zustandsparameter eine Dicke des Gleitlagers (120; 520), einen Abrieb des Gleitlagers (120; 520), einen Abstand eines Gehäuses (515) des Transportelements von der Führungsschiene (540) oder einen Wert für das Spiel des Gleitlagers (120; 520) umfasst, und
wobei die Prüfvorrichtung einen Teil der Transportbahn umfasst, welcher mindestens einen Sensor (580, 585) zur Messung des Zustandsparameters, insbesondere mittels mechanischer, kapazitiver, induktiver und/oder optischer Abstandsmessung, aufweist.

3. Transporteinrichtung zum Transport von Behältern in einer Behälterbehandlungsanlage mit
einer Transportbahn,
mindestens einem Transportelement (100; 200-1 - 200-3; 300-1, 300-2; 400-1 - 400-12; 800a, 800b) zum Transportieren eines oder mehrerer Behälter, das bewegbar an der Transportbahn angeordnet ist,
einer Wartungsvorrichtung (270; 370; 470) für das Transportelement, welche mit der Transportbahn verbunden ist,
einer Steuer- und/oder Regeleinheit (860), und
eine Prüfvorrichtung,
wobei die Transportbahn und das Transportelement derart ausgestaltet sind, dass das Transportelement mittels der Steuer- und/oder Regeleinheit (860) einzeln steuerbar entlang der Transportbahn geführt werden kann,
wobei die Steuer- und/oder Regeleinheit (860) dazu ausgebildet ist, das Transportelement in Abhängigkeit von mindestens einem Zustandsparameter des Transportelements der Wartungsvorrichtung (270; 370; 470) zuzuführen, und
wobei die Prüfvorrichtung dazu ausgebildet ist, den mindestens einen Zustandsparameter des Transportelements zu bestimmen,
**dadurch gekennzeichnet, dass**
das Transportelement (100; 200-1 - 200-3; 300-1, 300-2; 400-1 - 400-12; 800a, 800b) zumindest teilweise mittels mindestens eines Rolllagers an einer Führungsschiene (140; 240; 340; 440; 840) der Transportbahn gelagert ist,
wobei der mindestens eine Zustandsparameter eine Rotationsgeschwindigkeit des Rolllagers, eine Lautstärke eines Rollgeräuschs des Rolllagers oder einen Wert für eine Wärmeemission des Rolllagers umfasst, und
wobei die Prüfvorrichtung einen Teil der Transportbahn umfasst, welcher mindestens einen Sensor zur Messung des Zustandsparameters, insbesondere eine optische Kamera, einen piezoelektrischen Sensor, eine Thermographie-Kamera und/oder ein Pyrometer aufweist.

4. Transporteinrichtung nach einem der Ansprüche 1 bis 3, wobei das Transportelement (100; 200-1 - 200-3; 300-1, 300-2; 400-1 - 400-12; 800a, 800b) und zumindest ein Teil der Transportbahn derart ausgebildet sind, dass das Transportelement im Bereich des Teils der Transportbahn mittels einer magnetischen Kraft, vorzugsweise in Wechselwirkung mit der Transportbahn, bewegt werden kann.

5. Transporteinrichtung nach einem der vorhergehenden Ansprüche, wobei das Transportelement (100; 200-1 - 200-3; 300-1, 300-2; 400-1 - 400-12; 800a, 800b) vollständig magnetisch oder teilweise magnetisch und teilweise mechanisch oder vollständig mechanisch an der Transportbahn gelagert ist.

6. Transporteinrichtung nach einem der vorhergehenden Ansprüche,
wobei die Transportbahn eine Hauptstrecke (240; 340; 440) und eine Nebenstrecke (245; 345; 445) umfasst,
wobei die Wartungsvorrichtung (270; 370; 470) an der Nebenstrecke (245; 345; 445) angeordnet ist, und
wobei die Nebenstrecke mit der Hauptstrecke über mindestens eine Weiche (260a, 260b; 360a, 360b; 460a, 460b) zum Ausschleusen des Transportelements (200-1 - 200-3; 300-1, 300-2; 400-1 - 400-12) aus der Hauptstrecke und/oder Einleiten des Transportelements in die Hauptstrecke verbunden ist.

7. Transporteinrichtung nach einem der vorhergehenden Ansprüche,
wobei die Wartungsvorrichtung (270; 370; 470) mindestens eine Vorrichtung aus der Gruppe umfasst, die gebildet wird von einer Reinigungsvorrichtung, einer Sterilisationsvorrichtung, einer Schmiervorrichtung, einer Reparaturvorrichtung, einer Umbauvorrichtung, einer Wechselvorrichtung für Verschleißteile und einer Wechselvorrichtung für Formatteile.

8. Transporteinrichtung nach Anspruch 7,
wobei die Wechselvorrichtung für Verschleißteile und/oder die Wechselvorrichtung für Formatteile einen Montageroboter (375) und ein Magazin (322, 324) für Verschleißteile und/oder Formatteile aufweist, und
wobei der Montageroboter (375) dazu ausgebildet ist, ein Verschleißteil (320) und/oder ein Formatteil des Transportelements (300-1) automatisch durch ein Verschleißteil und/oder Formatteil aus dem Magazin (322) zu ersetzen.

9. Transporteinrichtung nach einem der vorhergehenden Ansprüche,
wobei die Wartungsvorrichtung (470) ein Magazin für Transportelemente aufweist, welches insbesondere als Einheit an die Wartungsvorrichtung koppelbar ist.

10. Transporteinrichtung nach einem der vorhergehenden Ansprüche,
wobei die Wartungsvorrichtung (270; 370; 470) mit der Transportbahn gemäß dem First In - First Out, FIFO, Prinzip verbunden ist.

11. Transporteinrichtung nach einem der vorhergehenden Ansprüche, wobei die Prüfvorrichtung eine Teststation umfasst, welche dazu ausgebildet ist, ein Funktionselement (110) des Transportelements, insbesondere eine Haltevorrichtung für Behälter zu testen.

12. Transporteinrichtung nach einem der vorhergehenden Ansprüche, wobei die Prüfvorrichtung entlang einer Nebenstrecke (245; 345; 445) der Transportbahn angeordnet ist.

13. Transporteinrichtung nach einem der vorhergehenden Ansprüche, weiterhin umfassend:
einen energiegepufferten Steuer- und/oder Regelkreis (860) und
eine Vielzahl von entlang der Transportbahn angeordneten Sensoren zur Bestimmung einer Position des mindestens einen Transportelements (800a, 800b) entlang der Transportbahn als Teil des energiegepufferten Steuer- und/oder Regelkreis (860),
wobei der energiegepufferte Steuer- und/oder Regelkreis (860) derart ausgebildet ist, dass er die Position des mindestens einen Transportelements (800a, 800b) bei ausgeschalteter Behälterbehandlungsanlage bestimmen kann.

14. Transporteinrichtung nach Anspruch 13, wobei der Steuer- und/oder Regelkreis (800a, 800b) weiterhin eine Speichereinrichtung zum Speichern der bestimmten Position umfasst.

15. Transporteinrichtung nach Anspruch 13 oder 14, wobei der Steuer- und/oder Regelkreis (860) durch eine unterbrechungsfreie Stromversorgung, USV (820), energiegepuffert wird.

16. Transporteinrichtung nach einem der Ansprüche 13 bis 15, wobei die Sensoren MagnetfeldSensoren sind.

17. Verfahren zur Wartung einer Vielzahl von einzeln steuerbaren Transportelementen (100; 200-1 - 200-3; 300-1, 300-2; 400-1 - 400-12; 800a, 800b) zum Transport von Behältern in einer Behälterbehandlungsanlage entlang einer Transportbahn, wobei die Vielzahl von Transportelementen bewegbar an der Transportbahn angeordnet sind, mit den Schritten:
Bestimmen mindestens eines Zustandsparameters eines Transportelements aus der Vielzahl von Transportelementen,
Vergleichen des bestimmten mindestens einen Zustandsparameters mit einem vorbestimmten Sollzustand des Transportelements,
Zuführen des Transportelements zu einer an der Transportbahn angeordneten Wartungsvorrichtung (270; 370; 470) durch mittels einer Steuer- und/oder Regeleinheit (860) gesteuertes Bewegen des Transportelements entlang der Transportbahn bei Abweichen des bestimmten mindestens einen Zustandsparameters von dem vorbestimmten Sollzustand, und
Durchführen mindestens eines Wartungsprozesses an dem Transportelement durch die Wartungsvorrichtung (270; 370; 470),
**gekennzeichnet dadurch, dass**
das Bestimmen des mindestens einen Zustandsparameters des Transportelements eine Verschleißprüfung eines Lagerelements (120; 520) des Transportelements umfasst, wobei der mindestens eine Zustandsparameter automatisch von einer Prüfvorrichtung, vorzugsweise in regelmäßigen Zeitabständen, bestimmt wird.

18. Verfahren nach Anspruch 17,
wobei das Bestimmen des mindestens einen Zustandsparameters des Transportelements weiterhin eine Funktionsprüfung eines Funktionselements (110), insbesondere einer Haltevorrichtung für Behälter, des Transportelements umfasst.

## Claims

1. A conveyor arrangement for conveying containers in a container treatment system, comprising
a conveyor track,
at least one conveyor element (100; 200-1 - 200-3; 300-1, 300-2; 400-1 - 400-12; 800a, 800b) movably arranged on the conveyor track and used for conveying one or a plurality of containers,
a conveyor element servicing device (270; 370; 470) connected to the conveyor track,
an open-loop and/or closed-loop control unit (860), and
an examination device,
wherein the conveyor track and the conveyor element are configured such that the conveyor element can be guided along the conveyor track in an individually controllable manner by means of the open-loop and/or closed-loop control unit (860),
wherein the open-loop and/or closed-loop control unit (860) is configured to supply the conveyor element to the servicing device (270; 370; 470) depending on at least one state parameter of the conveyor element,
wherein the examination device is configured for determining the at least one state parameter of the conveyor element, and
wherein the conveyor element (100; 200-1 - 200-3; 300-1, 300-2; 400-1 - 400-12; 800a, 800b) is supported on the conveyor track in an at least partially mechanical manner,
**characterized in that**
the at least one state parameter comprises a degree of wear of a bearing element (520) of the conveyor element,
wherein the examination device comprises a part of the conveyor track, which includes a plurality of interaction elements (150) and a plurality of sensors, in particular magnetic field sensors, arranged along the conveyor track and used for determining a position of the conveyor element along the conveyor track, and a measurement device, and
wherein the measurement device is configured for determining, by means of the interaction elements (150) and/or sensors, a coefficient of friction for a movement of the conveyor element along the conveyor track.

2. A conveyor arrangement for conveying containers in a container treatment system, comprising
a conveyor track,
at least one conveyor element (100; 200-1 - 200-3; 300-1, 300-2; 400-1 - 400-12; 800a, 800b) movably arranged on the conveyor track and used for conveying one or a plurality of containers,
a conveyor element servicing device (270; 370; 470) connected to the conveyor track,
an open-loop and/or closed-loop control unit (860), and
an examination device,
wherein the conveyor track and the conveyor element are configured such that the conveyor element can be guided along the conveyor track in an individually controllable manner by means of the open-loop and/or closed-loop control unit (860),
wherein the open-loop and/or closed-loop control unit (860) is configured to supply the conveyor element to the servicing device (270; 370; 470) depending on at least one state parameter of the conveyor element, and
wherein the examination device is configured for determining the at least one state parameter of the conveyor element,
**characterized in that**
the conveyor element (100; 200-1 - 200-3; 300-1, 300-2; 400-1 - 400-12; 800a, 800b) is supported on a guide rail (540) of the conveyor track, at least partially, by means of at least one plain bearing (120; 520),
wherein the at least one state parameter comprises a thickness of the plain bearing (120; 520), an abrasive wear of the plain bearing (120; 520), a distance between a housing (515) of the conveyor element and the guide rail (540) or a value for the amount of play of the plain bearing (120; 520), and
wherein the examination device comprises a part of the conveyor track, which includes at least one sensor (580, 585) for measuring the state parameter, in particular by means of mechanical, capacitive, inductive and/or optical distance measurement.

3. A conveyor arrangement for conveying containers in a container treatment system, comprising
a conveyor track,
at least one conveyor element (100; 200-1 - 200-3; 300-1, 300-2; 400-1 - 400-12; 800a, 800b) movably arranged on the conveyor track and used for conveying one or a plurality of containers,
a conveyor element servicing device (270; 370; 470) connected to the conveyor track,
an open-loop and/or closed-loop control unit (860), and
an examination device,
wherein the conveyor track and the conveyor element are configured such that the conveyor element can be guided along the conveyor track in an individually controllable manner by means of the open-loop and/or closed-loop control unit (860),
wherein the open-loop and/or closed-loop control unit (860) is configured to supply the conveyor element to the servicing device (270; 370; 470) depending on at least one state parameter of the conveyor element, and
wherein the examination device is configured for determining the at least one state parameter of the conveyor element,
**characterized in that**
the conveyor element (100; 200-1 - 200-3; 300-1, 300-2; 400-1 - 400-12; 800a, 800b) is supported on a guide rail (140; 240; 340; 440; 840) of the conveyor track, at least partially, by means of at least one roller bearing,
wherein the at least one state parameter comprises a rotational speed of the roller bearing, a loudness level of a rolling noise of the roller bearing or a value for a heat emission of the roller bearing, and
wherein the examination device comprises a part of the conveyor track, which includes at least one sensor for measuring the state parameter, in particular an optical camera, a piezoelectric sensor, a thermographic camera and/or a pyrometer.

4. The conveyor arrangement according to one of the claims 1 to 3, wherein the conveyor element (100; 200-1 - 200-3; 300-1, 300-2; 400-1 - 400-12; 800a, 800b) and at least a part of the conveyor track are configured such that, in the area of said part of the conveyor track, the conveyor element can be moved by means of a magnetic force, preferably in interaction with the conveyor track.

5. The conveyor arrangement according to one of the preceding claims, wherein the conveyor element (100; 200-1 - 200-3; 300-1, 300-2; 400-1 - 400-12; 800a, 800b) is supported on the conveyor track in a fully magnetic manner, or in a partly magnetic and a partly mechanical manner, or in a fully mechanical manner.

6. The conveyor arrangement according to one of the preceding claims,
wherein the conveyor track comprises a main line (240; 340; 440) and a secondary line (245; 345; 445),
wherein the servicing device (270; 370; 470) is arranged at the secondary line (245; 345; 445), and
wherein the secondary line is connected to the main line via at least one track switch (260a, 260b; 360a, 360b; 460a, 460b) for discharging the conveyor element (200-1 - 200-3; 300-1, 300-2; 400-1 - 400-12) from the main line and/or for introducing the conveyor element into the main line.

7. The conveyor arrangement according to one of the preceding claims,
wherein the servicing device (270; 370; 470) comprises at least one device of the group consisting of a cleaning device, a sterilization device, a lubricating device, a repair device, a reconfiguring device, a replacement device for wearing parts and a replacement device for format parts.

8. The conveyor arrangement according to claim 7,
wherein the replacement device for wearing parts and/or the replacement device for format parts comprises an assembly robot (375) and a magazine (322, 324) for wearing parts and/or format parts, and
wherein the assembly robot (375) is configured for replacing a wearing part (320) and/or a format part of the conveyor element (300-1) automatically by a wearing part and/or a format part from the magazine (322).

9. The conveyor arrangement according to one of the preceding claims,
wherein the servicing device (470) comprises a magazine for conveyor elements, which is, in particular, adapted to be coupled as a unit to the servicing device.

10. The conveyor arrangement according to one of the preceding claims,
wherein the servicing device (270; 370; 470) is connected to the conveyor track according to the First In - First Out, FIFO, principle.

11. The conveyor arrangement according to one of the preceding claims, wherein the examination device comprises a test station configured for testing a functional element (110) of the conveyor element, in particular a holding device for containers.

12. The conveyor arrangement according to one of the preceding claims, wherein the examination device is arranged along a secondary line (245; 345; 445) of the conveyor track.

13. The conveyor arrangement according to one of the preceding claims, further comprising:
an energy-buffered open-loop and/or closed-loop control circuit (860) and
a plurality of sensors arranged along the conveyor track and used for determining a position of the at least one conveyor element (800a, 800b) along the conveyor track as part of the energy-buffered open-loop and/or closed-loop control circuit (860),
wherein the energy-buffered open-loop and/or closed-loop control circuit (860) is configured such that it is capable of determining the position of the at least one conveyor element (800a, 800b) in the switched-off condition of the container treatment system.

14. The conveyor arrangement according to claim 13, wherein the open-loop and/or closed-loop control circuit (800a, 800b) additionally comprises a memory unit for storing a specific position.

15. The conveyor arrangement according to claim 13 or 14, wherein the open-loop and/or closed-loop control circuit (860) is energy-buffered by an uninterruptible power supply, UPS (820).

16. The conveyor arrangement according to one of the claims 13 to 15, wherein the sensors are magnetic field sensors.

17. A method for servicing a plurality of individually controllable conveyor elements (100; 200-1 - 200-3; 300-1, 300-2; 400-1 - 400-12; 800a, 800b) for conveying containers in a container treatment system along a conveyor track, wherein the plurality of conveyor elements is arranged so as to be movable on the conveyor track, said method comprising the following steps:
determining at least one state parameter of a conveyor element among said plurality of conveyor elements,
comparing said determined at least one state parameter with a predetermined target state of the conveyor element,
supplying the conveyor element to a servicing device (270; 370; 470), which is arranged at the conveyor track, by moving the conveyor element along the conveyor track in the event that the determined at least one state parameter deviates from the predetermined target state, said movement being controlled by means of an open-loop and/or closed-loop control unit (860), and
executing at least one servicing process at the conveyor element by the servicing device (270; 370; 470),
**characterized in that**
the determination of the at least one state parameter of the conveyor element comprises examination of the wear of a bearing element (120; 520) of the conveyor element,
wherein the at least one state parameter is automatically determined by an examination device, preferably at regular time intervals.

18. The method according to claim 17,
wherein the determination of the at least one state parameter of the conveyor element further comprises a function test of a functional element (110), in particular of a container holding device, of the conveyor element.

## Revendications

1. Dispositif de transport pour le transport de contenants dans une installation de traitement de contenants, comprenant
une voie de transport,
au moins un élément de transport (100; 200-1 - 200-3; 300-1, 300-2; 400-1 - 400-12; 800a, 800b) pour transporter un ou plusieurs contenants, qui est agencé de manière déplaçable sur la voie de transport,
un dispositif d'entretien (270; 370; 470) pour l'élément de transport, qui est relié à la voie de transport,
une unité de commande et/ou de régulation (860), et
un dispositif de contrôle,
la voie de transport et l'élément de transport étant conçus pour que l'élément de transport puisse être guidé le long de la voie de transport en étant commandé individuellement au moyen de l'unité de commande et/ou de régulation (860),
l'unité de commande et/ou de régulation (860) étant conçue pour amener l'élément de transport au dispositif d'entretien (270; 370; 470) en fonction d'au moins un paramètre d'état de l'élément de transport,
le dispositif de contrôle étant conçu pour déterminer ledit au moins un paramètre d'état de l'élément de transport, et
l'élément de transport (100; 200-1 - 200-3; 300-1, 300-2; 400-1 - 400-12; 800a, 800b) étant monté au moins en partie mécaniquement sur la voie de transport,
**caractérisé en ce que**
ledit au moins un paramètre d'état comprend un degré d'usure d'un élément de palier de montage (520) de l'élément de transport,
le dispositif de contrôle comprenant une partie de la voie de transport, qui présente un grand nombre d'éléments d'interaction réciproque (150) et un grand nombre de capteurs agencés le long de la voie de transport, notamment des capteurs de champ magnétique, pour la détermination d'une position de l'élément de transport le long de la voie de transport, et un dispositif de mesure, et
le dispositif de mesure étant conçu pour déterminer, au moyen des éléments d'interaction réciproque (150) et/ou des capteurs, un coefficient de frottement pour un mouvement de déplacement de l'élément de transport le long de la voie de transport.

2. Dispositif de transport pour le transport de contenants dans une installation de traitement de contenants, comprenant
une voie de transport,
au moins un élément de transport (100; 200-1 - 200-3; 300-1, 300-2; 400-1 - 400-12; 800a, 800b) pour transporter un ou plusieurs contenants, qui est agencé de manière déplaçable sur la voie de transport,
un dispositif d'entretien (270; 370; 470) pour l'élément de transport, qui est relié à la voie de transport,
une unité de commande et/ou de régulation (860), et
un dispositif de contrôle,
la voie de transport et l'élément de transport étant conçus pour que l'élément de transport puisse être guidé le long de la voie de transport en commandé individuellement au moyen de l'unité de commande et/ou de régulation (860),
l'unité de commande et/ou de régulation (860) étant conçue pour amener l'élément de transport au dispositif d'entretien (270; 370; 470) en fonction d'au moins un paramètre d'état de l'élément de transport, et
le dispositif de contrôle étant conçu pour déterminer ledit au moins un paramètre d'état de l'élément de transport, et
**caractérisé en ce que**
l'élément de transport (100; 200-1 - 200-3; 300-1, 300-2; 400-1 - 400-12; 800a, 800b) est monté au moins en partie au moyen d'au moins un palier lisse (120; 520) sur une glissière de guidage (540) de la voie de transport,
ledit au moins un paramètre d'état comprenant une épaisseur du palier lisse (120; 520), une érosion du palier lisse, une distance d'un carter (515) de l'élément de transport à la glissière de guidage (540) ou une valeur pour le jeu du palier lisse (120; 520),
et le dispositif de contrôle comprenant une partie de la voie de transport, qui présente au moins un capteur (580, 585) pour la mesure du paramètre d'état, notamment par une mesure de distance mécanique, capacitive, inductive et/ou optique.

3. Dispositif de transport pour le transport de contenants dans une installation de traitement de contenants, comprenant
une voie de transport,
au moins un élément de transport (100; 200-1 - 200-3; 300-1, 300-2; 400-1 - 400-12; 800a, 800b) pour transporter un ou plusieurs contenants, qui est agencé de manière déplaçable sur la voie de transport,
un dispositif d'entretien (270; 370; 470) pour l'élément de transport, qui est relié à la voie de transport,
une unité de commande et/ou de régulation (860), et
un dispositif de contrôle,
la voie de transport et l'élément de transport étant conçus pour que l'élément de transport puisse être guidé le long de la voie de transport en commandé individuellement au moyen de l'unité de commande et/ou de régulation (860),
l'unité de commande et/ou de régulation (860) étant conçue pour amener l'élément de transport au dispositif d'entretien (270; 370; 470) en fonction d'au moins un paramètre d'état de l'élément de transport, et
le dispositif de contrôle étant conçu pour déterminer ledit au moins un paramètre d'état de l'élément de transport, et
**caractérisé en ce que**
l'élément de transport (100; 200-1 - 200-3; 300-1, 300-2; 400-1 - 400-12; 800a, 800b) est monté au moins en partie au moyen d'au moins un palier à roulement sur une glissière de guidage (140; 240; 340; 440; 840) de la voie de transport,
ledit au moins un paramètre d'état comprenant une vitesse de rotation du palier à roulement, un volume acoustique d'un bruit de roulement du palier à roulement ou une valeur pour une émission de chaleur du palier à roulement, et
le dispositif de contrôle comprenant une partie de la voie de transport, qui présente au moins un capteur pour la mesure du paramètre d'état, notamment une caméra optique, un capteur piézoélectrique, une caméra thermographique et/ou un pyromètre.

4. Dispositif de transport selon l'une des revendications 1 à 3, dans lequel l'élément de transport (100; 200-1 - 200-3; 300-1, 300-2; 400-1 - 400-12; 800a, 800b) et au moins une partie de la voie de transport sont conçus de manière à ce que l'élément de transport puisse être déplacé dans zone de la ladite partie de voie de transport, au moyen d'une force magnétique, de préférence par interaction réciproque avec la voie de transport.

5. Dispositif de transport selon l'une des revendications précédentes, dans lequel l'élément de transport (100; 200-1 - 200-3; 300-1, 300-2; 400-1 - 400-12; 800a, 800b) est monté sur la voie de transport totalement par voie magnétique ou partiellement par voie magnétique et partiellement par voie mécanique, ou totalement par voie mécanique.

6. Dispositif de transport selon l'une des revendications précédentes,
dans lequel la voie de transport comprend un parcours principal (240; 340; 440) et un parcours auxiliaire (245; 345; 445),
dans lequel le dispositif d'entretien (270; 370; 470) est agencé sur le parcours auxiliaire (245; 345; 445), et
dans lequel le parcours auxiliaire est relié au parcours principal par l'intermédiaire d'au moins un aiguillage (260a, 260b; 360a, 360b; 460a, 460b) pour extraire l'élément de transport (200-1 - 200-3; 300-1, 300-2; 400-1 - 400-12) du parcours principal et/ou pour introduire l'élément de transport dans le parcours principal.

7. Dispositif de transport selon l'une des revendications précédentes,
dans lequel le dispositif d'entretien (270; 370; 470) comprend au moins un dispositif parmi ceux du groupe formé par un dispositif de nettoyage, un dispositif de stérilisation, un dispositif de graissage, un dispositif de réparation, un dispositif de reconversion, un dispositif de remplacement pour pièces d'usure et un dispositif de remplacement pour des pièces relatives au format.

8. Dispositif de transport selon l'une des revendications précédentes,
dans lequel le dispositif de remplacement pour pièces d'usure et/ou le dispositif de remplacement pour des pièces relatives au format, comprend un robot de montage (375) et un magasin (322, 324) pour des pièces d'usure et/ou des pièces relatives au format, et
dans lequel le robot de montage (375) est conçu pour remplacer automatiquement une pièce d'usure (320) et/ou une pièce relative au format de l'élément de transport (300-1), par une pièce d'usure et/ou une pièce relative au format en provenance du magasin (322).

9. Dispositif de transport selon l'une des revendications précédentes,
dans lequel le dispositif d'entretien (470) comprend un magasin pour éléments de transport, qui peut être couplé, notamment sous forme d'unité, au dispositif d'entretien.

10. Dispositif de transport selon l'une des revendications précédentes,
dans lequel le dispositif d'entretien (270; 370; 470) est relié à la voie de transport conformément au principe First In - First Out (premier entré - premier sorti) dit principe FIFO.

11. Dispositif de transport selon l'une des revendications précédentes, dans lequel le dispositif de contrôle comprend un poste de test, qui est conçu pour tester un élément fonctionnel (110) de l'élément de transport, notamment un dispositif de maintien pour contenants.

12. Dispositif de transport selon l'une des revendications précédentes, dans lequel le dispositif de contrôle est agencé le long d'un parcours auxiliaire (245; 345; 445) de la voie de transport.

13. Dispositif de transport selon l'une des revendications précédentes, comprenant en outre :
un circuit de commande et/ou de régulation (860) à stockage d'énergie, et
un grand nombre de capteurs agencés le long de la voie de transport, pour déterminer une position dudit au moins un élément de transport (800a, 800b) le long de la voie de transport, en tant que partie du circuit de commande et/ou de régulation (860) à stockage d'énergie,
le circuit de commande et/ou de régulation (860) à stockage d'énergie étant conçu de manière à être en mesure de déterminer la position dudit au moins un élément de transport (800a, 800b) lorsque l'installation de traitement de contenants est commutée à l'arrêt.

14. Dispositif de transport selon la revendication 13, dans lequel le circuit de commande et/ou de régulation (860) comprend en outre, un dispositif de mémoire pour mémoriser ladite position déterminée.

15. Dispositif de transport selon la revendication 13 ou la revendication 14, dans lequel le circuit de commande et/ou de régulation (860) est alimenté en énergie par une alimentation en courant exempte de coupures, USV (820).

16. Dispositif de transport selon l'une des revendications 13 à 15, dans lequel les capteurs sont des capteurs de champ magnétique.

17. Procédé pour assurer l'entretien d'un grand nombre d'éléments de transport (100; 200-1 - 200-3; 300-1, 300-2; 400-1 - 400-12; 800a, 800b) pouvant être commandés individuellement et destinés au transport de contenants dans une installation de traitement de contenants, le long d'une voie de transport, le grand nombre d'éléments de transport étant agencés de manière déplaçable le long de la voie de transport, le procédé comprenant les étapes suivantes :
détermination d'au moins un paramètre d'état d'un élément de transport du grand nombre d'éléments de transport,
comparaison dudit au moins un paramètre d'état déterminé avec un état de consigne prédéterminé de l'élément de transport,
amenée de l'élément de transport à un dispositif d'entretien (270; 370; 470) agencé au niveau de la voie de transport, par un déplacement de l'élément de transport le long de la voie de transport en étant commandé au moyen d'une unité de commande et/ou de régulation (860), dans le cas d'un écart dudit au moins un paramètre d'état déterminé, par rapport à l'état de consigne prédéterminé, et
exécution d'au moins un processus d'entretien sur l'élément de transport par le dispositif d'entretien (270; 370; 470),
**caractérisé en ce que**
la détermination dudit au moins un paramètre d'état de l'élément de transport comprend un contrôle de l'usure d'un élément de palier (120; 520) de l'élément de transport, ledit au moins un paramètre d'état étant déterminé automatiquement par un dispositif de contrôle, de préférence à des intervalles de temps réguliers.

18. Procédé selon la revendication 17,
d'après lequel la détermination dudit au moins un paramètre d'état de l'élément de transport comprend, en outre, un contrôle de fonctionnement d'un élément fonctionnel (110), notamment d'un dispositif de maintien pour contenants, de l'élément de transport.
